# EUROPÄISCHE PATENTSCHRIFT

(11) **EP 2 469 114 B1**
(45) Veröffentlichungstag und Bekanntmachung des Hinweises auf die Patenterteilung: **01.11.2017**
(21) Anmeldenummer: 11194920.2
(22) Anmeldetag: 21.12.2011
(51) Int. Cl.: F16D 21/06, F16D 25/08

(54) **Kupplungseinrichtung**
Coupling device
Dispositif de couplage

(30) Priorität: 21.12.2010 DE 102010055334; 23.03.2011 DE 102011014778; 19.12.2011 DE 102011122741
(43) Veröffentlichungstag der Anmeldung: 27.06.2012
(73) Patentinhaber: BorgWarner Inc., Auburn Hills, MI 48326 (US)
(72) Erfinder: Hauck, Hans Jürgen, 74523 Schwäbisch Hall (DE); Zacher, Tobias, 99869 Drei Gleichen / OT Mühlberg (DE)
(74) Vertreter: Leckel, Ulf

(56) Entgegenhaltungen:
- EP-A1- 2 085 632
- DE-A1-102007 005 461
- DE-A1-102007 022 422
- US-A1- 2005 279 605

## Beschreibung

Die vorliegende Erfindung betrifft eine Kupplungseinrichtung zur Anordnung in einem Antriebsstrang eines Kraftfahrzeugs zwischen einer Antriebseinheit und einem Getriebe, die mindestens eine einer Getriebeeingangswelle zugeordnete Lamellenkupplungsanordnung zur wahlweisen Drehmomentübertragung zwischen der Antriebseinheit und der Getriebeeingangswelle aufweist, wobei die Lamellenkupplungsanordnung über ein Kraftübertragungselement betätigt werden kann.

Aus dem Stand der Technik sind Kupplungseinrichtungen zur Anordnung zwischen einer Antriebseinheit und einem Getriebe bekannt, die mindestens eine Lamellenkupplungsanordnung aufweisen, wobei die Lamellenkupplungsanordnung über ein Kraftübertragungselement betätigt werden kann. So offenbart die US 2005/0279605 A1 den Oberbegriff von Anspruch 1. Die US 2005/0279605 A1 offenbart eine Kupplungseinrichtung mit einem Kraftübertragungselement, das Axialfinger aufweist, die sich durch Aussparungen in einem Lamellenträger erstrecken. Bei der Montage werden die Axialfinger in die Aussparungen eingeführt. Um eine verliersichere Abstützung des Kraftübertragungselements an dem Lamellenträger zu bewirken, wird anschließend eine Sicherungsring an den über die Aussparungen hervorstehenden freien Enden der Axialfinger befestigt. Die bekannten Kupplungseinrichtungen haben sich bewährt, sind jedoch insofern verbesserungsbedürftig, als dass deren Zusammenbau oder Montage erschwert ist.

Es ist daher eine Aufgabe der vorliegenden Erfindung, eine Kupplungseinrichtung, vorzugsweise eine Mehrfachkupplungseinrichtung, zu schaffen, die durch einen geringen konstruktiven Aufwand besonders einfach zusammengebaut oder montiert werden kann.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Kupplungseinrichtung, bei der es sich vorzugsweise um eine Mehrfachkupplungseinrichtung, besonders bevorzugt um eine Doppelkupplungseinrichtung, handelt, kann in einem Antriebsstrang eines Kraftfahrzeugs zwischen einer Antriebseinheit und einem Getriebe angeordnet sein. Die Kupplungseinrichtung weist eine einer Getriebeeingangswelle zugeordnete Lamellenkupplungsanordnung zur wahlweisen Drehmomentübertragung zwischen der Antriebseinheit und der Getriebeeingangswelle auf. Die Lamellenkupplungsanordnung wird dabei über ein Kraftübertragungselement betätigt. Mit anderen Worten wird die Betätigungskraft für die Lamellenkupplungsanordnung über das Kraftübertragungselement, vorzugsweise unmittelbar, auf die Lamellen oder das Lamellenpaket der Lamellenkupplungsanordnung übertragen. Erfindungsgemäß ist das Kraftübertragungselement verliersicher an einem Lamellenträger der Lamellenkupplungsanordnung abstützbar oder abgestützt. Indem das Kraftübertragungselement verliersicher an dem Lamellenträger der Lamellenkupplungsanordnung abstützbar oder abgestützt ist, kann das Kraftübertragungselement mit der Lamellenkupplungsanordnung zu einer zusammenhängenden Baueinheit bzw. zu einem zusammenhängenden Modul zusammengefasst werden, deren bzw. dessen Handhabung vereinfacht ist, zumal kein zusätzlicher Aufwand betrieben werden muss, um den Zusammenhalt einer solchen Baueinheit bzw. eines solchen Moduls während der Montage derselben bzw. desselben an einer anderen Baueinheit zu gewährleisten. Somit ist die Montage einer solchen Kupplungseinrichtung besonders einfach. Auch hat die erfindungsgemäße Kupplungseinrichtung insbesondere dann große Vorteile bei der Montage, wenn es sich bei der Kupplungseinrichtung um eine Kupplungseinrichtung handelt, bei der die eigentliche Betätigungseinrichtung für die Lamellenkupplungsanordnung und das Kraftübertragungselement unterschiedlichen Baugruppen bzw. Modulen angehören, die nicht zusammen oder zeitgleich bzw. unabhängig oder separat voneinander montiert werden. Um die verliersichere Abstützung des Kraftübertragungselements an dem Lamellenträger der Lamellenkupplungsanordnung besonders schnell und einfach bewirken zu können und somit die Montage der Kupplungseinrichtung weiter zu vereinfachen, ist das Kraftübertragungselement mit dem Lamellenträger der Lamellenkupplungsanordnung verrastbar oder verrastet. Zu diesem Zweck sind entsprechende Rastmittel an dem Kraftübertragungselement oder/und dem Lamellenträger der Lamellenkupplungsanordnung vorgesehen, wobei diese Rastmittel sowohl einstückig mit dem jeweiligen Bauteil als auch separat davon ausgebildet sein können. Um den konstruktiven Aufwand relativ gering zu halten und somit einen einfachen Aufbau zu erzielen, sind die Betätigungsfinger verrastend in die Aussparungen in dem Lamellenträger einführbar oder eingeführt. Da die Betätigungsfinger und der Lamellenträger im Bereich der Aussparungen in dem Lamellenträger ohnehin besonders dicht beieinander angeordnet sind, können hier relativ einfache und kleinbauende Rastmittel oder Rastelemente zum Einsatz kommen, die - wie bereits zuvor erwähnt - entweder einstückig mit dem jeweiligen Bauteil oder separat von den Bauteilen ausgebildet sein können.

In einer vorteilhaften Ausführungsform der erfindungsgemäßen Kupplungseinrichtung ist die Lamellenkupplungsanordnung hydraulisch betätigbar. Zu diesem Zweck kann beispielsweise ein entsprechender Betätigungskolben zur Beaufschlagung des Kraftübertragungselements vorgesehen sein, wobei dem Betätigungskolben eine entsprechende Druckkammer für das Hydraulikmedium zugeordnet ist.

In einer weiteren vorteilhaften Ausführungsform der erfindungsgemäßen Kupplungseinrichtung ist die Lamellenkupplungsanordnung als eine nasslaufende Lamellenkupplungsanordnung ausgebildet. Mit anderen Worten laufen die Lamellen der Lamellenkupplungsanordnung bei dieser Ausführungsform in einem Kühl- oder/und Schmiermedium, bei dem es sich vorzugsweise um ein Kühl- oder/und Schmieröl handelt. Bei dieser Ausführungsform ist es ferner bevorzugt, wenn auch weitere Lamellenkupplungsanordnungen, wie sie bei einer Doppel- oder Mehrfachkupplungseinrichtung vorgesehen sind, als nasslaufende Lamellenkupplungsanordnungen ausgebildet sind. Es ist bei dieser Ausführungsform darüber hinaus bevorzugt, wenn die Lamellenkupplungsanordnung, gegebenenfalls zusammen mit den anderen Lamellenkupplungsanordnungen, innerhalb eines Nassraums angeordnet ist, der von einer Getriebegehäuseglocke und einem der Getriebegehäuseglocke zugeordneten Deckel begrenzt ist.

Das Kraftübertragungselement weist Betätigungsfinger auf, die sich durch Aussparungen in dem Lamellenträger erstrecken, um die Betätigungskraft auf die Lamellen des Lamellenpakets der Lamellenkupplungsanordnung übertragen zu können. Bei den Betätigungsfingern handelt es sich vorzugsweise um Axialfinger, also um Betätigungsfinger, die sich im Wesentlichen in axialer Richtung erstrecken. Die Aussparungen sind wiederum vorzugsweise in einem Stütz- oder Radialabschnitt des Lamellenträgers vorgesehen. Dank der Aussparungen in dem Lamellenträger und der Freiräume zwischen den Betätigungsfingern wird eine leichte Bauweise realisiert, die dennoch eine sichere Übertragung der Betätigungskraft über das Kraftübertragungselement auf die Lamellen der Lamellenkupplungsanordnung gewährleistet. Darüber hinaus kann bereits durch die sich in die Aussparungen erstreckenden Betätigungsfinger eine einfache Drehmitnahmeverbindung in Umfangsrichtung zwischen dem Lamellenträger und dem Kraftübertragungselement bewirkt werden. Des Weiteren wird eine Aufweitung des Kraftübertragungselements im Bereich der Betätigungsfinger, vorzugsweise durch einen radial nach innen weisenden Rand der Aussparungen, verhindert, an dem der jeweilige Betätigungsfinger abstützbar ist.

In einer besonders bevorzugten Ausführungsform der erfindungsgemäßen Kupplungseinrichtung sind die Betätigungsfinger derart verrastend in einer Axialrichtung in die Aussparungen einführbar oder eingeführt, dass das Kraftübertragungselement in der entgegengesetzten Axialrichtung über die Betätigungsfinger an dem Lamellenträger verliersicher abstützbar oder abgestützt ist.

In einer weiteren vorteilhaften Ausführungsform der erfindungsgemäßen Kupplungseinrichtung ist ein Rückstellelement zum Zurückstellen des Kraftübertragungselements vorgesehen, wobei das Kraftübertragungselement entgegen der Rückstellkraft des zumindest einen Rückstellelements an dem Lamellenträger abstützbar oder abgestützt ist. Bei dieser Ausführungsform kann das Rückstellelement das Kraftübertragungselement gegen den Lamellenträger vorspannen, oder auch bereits entspannt sein, bevor das Kraftübertragungselement an dem Lamellenträger abgestützt ist. Die erste Variante hat dabei den Vorteil, dass das Kraftübertragungselement in einer Montageposition an dem Lamellenträger gehalten und gegen diesen vorgespannt ist, was die Montage eines Moduls aus Lamellenkupplungsanordnung und Kraftübertragungselement vereinfachen kann. Die zweite Variante ist hingegen insofern von Vorteil, als dass etwaig vorhandene Rast- oder Stützmittel zur verliersicheren Abstützung des Kraftübertragungselements an dem Lamellenträger weniger stark belastet werden und im Wesentlichen nur das Eigengewicht des Kraftübertragungselements halten müssen.

Grundsätzlich kann das Rückstellelement zum Zurückstellen des Kraftübertragungselements an beliebiger Stelle innerhalb der Kupplungseinrichtung angeordnet sein. In einer weiteren vorteilhaften Ausführungsform der erfindungsgemäßen Kupplungseinrichtung ist das Rückstellelement zwischen dem Lamellenträger, vorzugsweise einem Stütz- oder/und Radialabschnitt des Lamellenträgers, und dem Kraftübertragungselement angeordnet. Dies ermöglicht eine besonders direkte und schnelle Zurückstellung des Kraftübertragungselements. Alternativ oder ergänzend hierzu ist das mindestens eine Rückstellelement zwischen den Lamellen, vorzugsweise entweder zwischen den Außenlamellen oder den Innenlamellen, der Lamellenkupplungsanordnung angeordnet, um dort zu wirken. Die Anordnung eines oder mehrerer Rückstellelemente zwischen den Lamellen hat den Vorteil, dass die Lamellen sicher voneinander getrennt werden, wenn keine Betätigungskraft mehr auf das Lamellenpaket der Lamellenkupplungsanordnung ausgeübt wird, so dass ein besonders geringes Schleppmoment erzielt werden kann. Als besonders vorteilhaft hat es sich in diesem Zusammenhang herausgestellt, wenn mindestens ein Rückstellelement zwischen dem Lamellenträger und dem Kraftübertragungselement angeordnet ist oder wirkt, während mindestens ein weiteres Rückstellelement zwischen den Lamellen der Lamellenkupplungsanordnung wirkt, um die Vorteile beider zuvor erwähnten Ausführungsvarianten einander verstärkend zu kombinieren.

Um die Zurückstellung des Kraftübertragungselementes zu bewirken, kann ein beliebig ausgebildetes Rückstellelement zum Aufbringen der Rückstellkraft eingesetzt werden. Als besonders vorteilhaft hat sich in diesem Zusammenhang jedoch eine Rückstellfeder, also ein elastisch federndes Rückstellelement, erwiesen, das in einer weiteren vorteilhaften Ausführungsform der erfindungsgemäßen Kupplungseinrichtung zum Einsatz kommt. Diese Rückstellfeder ist vorzugsweise als eine Schraubenfeder ausgebildet. Der Einsatz einer Schraubenfeder ist insbesondere dann sinnvoll, wenn das Rückstellelement zwischen dem Lamellenträger und der Kraftübertragungselement wirken soll. Bei dieser Ausführungsform kann das Rückstellelement jedoch auch als Tellerfeder ausgebildet sein. Eine Tellerfeder kann sowohl sinnvoll zwischen dem Lamellenträger und dem Kraftübertragungselement als auch zwischen den Lamellen der Lamellenkupplungsanordnung zum Einsatz kommen. Bei dieser Ausführungsform ist jedoch auch der Einsatz einer in Umfangsrichtung gewellten Ringfeder denkbar, deren wellenartiger Verlauf in Umfangsrichtung eine Federwirkung in Axialrichtung entfaltet. Der Einsatz einer in Umfangsrichtung gewellten Ringfeder empfiehlt sich insbesondere beim Einsatz des Rückstellelementes zwischen den Lamellen der Lamellenkupplungsanordnung, da die in Umfangsrichtung gewellte Ringfeder in noch stärkerem Maße als die zuvor erwähnte Tellerfeder bezogen auf ihren Querschnitt eine relativ geringe Ausdehnung in radialer Richtung haben kann und dennoch eine starke Federwirkung entlang eines kurzen axialen Weges entfalten kann.

Wie bereits zuvor erwähnt, kann es von Vorteil sein, wenn etwaige Stütz- oder Rastelemente, die das Abstützen und gegebenenfalls Verrasten des Kraftübertragungselements an dem bzw. mit dem Lamellenträger bewirken sollen, einstückig mit dem Kraftübertragungselement oder/und dem Lamellenträger ausgebildet sind. Dies kann jedoch gegebenenfalls eine aufwendige Bearbeitung des Kraftübertragungselements oder/und des Lamellenträgers erforderlich machen. Um also eine relativ aufwendige Bearbeitung des Kraftübertragungselements oder/und des Lamellenträgers auszuschließen, ist das Kraftübertragungselement in einer besonders vorteilhaften Ausführungsform der erfindungsgemäßen Kupplungseinrichtung mittelbar über mindestens ein Stützelement abstützbar und gegebenenfalls verrastbar. Im Falle eines verrastbaren Stützelements kann das Stützelement ebenso als Rastelement bezeichnet werden. Das Stützelement, bei dem es sich vorzugsweise um ein Kunststoffelement handelt, kann sowohl an dem Kraftübertragungselement als auch an dem Lamellenträger befestigbar oder befestigt sein. Unabhängig davon, ob das Stützelement an dem Kraftübertragungselement oder dem Lamellenträger befestigbar oder befestigt ist, ist es bei dieser Ausführungsform ferner bevorzugt, wenn das Stützelement verrastend an dem Kraftübertragungselement oder dem Lamellenträger befestigt werden kann oder befestigt ist. Dies hat den Vorteil, dass das Stützelement zunächst besonders einfach an dem Kraftübertragungselement oder dem Lamellenträger befestigt werden kann, indem das Stützelement mit dem Kraftübertragungselement oder dem Lamellenträger verrastet wird. Im Anschluss daran können das Kraftübertragungselement und der Lamellenträger derart zusammengeführt werden, dass das Stützelement ein Abstützen des Kraftübertragungselements an dem Lamellenträger über das Stützelement und gegebenenfalls auch ein Verrasten des Kraftübertragungselements mit dem Lamellenträger vermittels des Stützelementes bewirkt. Auf diese Weise wird im Rahmen der Montage die Erzeugung eines Moduls aus Lamellenkupplungsanordnung und Kraftübertragungselement deutlich vereinfacht, das im Nachhinein einfach und sicher weiter verarbeitet bzw. verbaut werden kann.

In einer weiteren bevorzugten Ausführungsform der erfindungsgemäßen Kupplungseinrichtung, die auf der vorangehend beschriebenen Ausführungsform basiert, ist das erwähnte Stützelement in eine der Aussparungen in dem Lamellenträger einsetzbar oder eingesetzt, wobei das Stützelement in der Aussparung abstützend und gegebenenfalls verrastend mit dem jeweiligen Betätigungsfinger zusammenwirkt. Innerhalb der Aussparung ist das Stützelement bauraumsparend angeordnet, wobei das Stützelement an dieser Stelle ferner eine zusätzliche Zentrierung des Kraftübertragungselements über das Stützelement angrenzenden Betätigungsfinger bewirken kann. Überdies kann das Stützelement an dieser Stelle ferner als Führung für den Betätigungsfinger wirken, so dass dem Stützelement hier eine Doppelfunktion zukommt. Darüber hinaus kann das Stützelement an dieser Stelle durch geeignete Anordnung ein Anschlagen der Betätigungsfinger an dem Rand der Aussparungen verhindern und somit eine Geräuschentwicklung und einen Verschleiß an dieser Stelle verringern. Letzteres ist insbesondere dann der Fall, wenn das Kraftübertragungselement und der Lamellenträger aus Metall gefertigt sind, während das Stützelement aus Kunststoff gebildet ist.

In einer weiteren vorteilhaften Ausführungsform der erfindungsgemäßen Kupplungseinrichtung ist das Stützelement in Umfangsrichtung, vorzugsweise in beiden Umfangsrichtungen, besonders bevorzugt ausschließlich in Umfangsrichtung, mit dem jeweiligen Betätigungsfinger verrastbar oder verrastet. So können an dem Stützelement beispielsweise seitliche Rastzungen vorgesehen sein, die in entgegengesetzte Umfangsrichtungen mit dem jeweiligen Betätigungsfinger verrasten oder in diesen einrasten.

Um den zuvor erwähnten Vorteil einer geringeren Geräuschentwicklung und eines geringeren Verschleißes an den Betätigungsfingern oder/und dem Lamellenträger zu erreichen, sind die Betätigungsfinger in einer weiteren bevorzugten Ausführungsform der erfindungsgemäßen Kupplungseinrichtung unter Zwischenlage des Stützelements in Umfangsrichtung, vorzugsweise in beiden Umfangsrichtungen, besonders bevorzugt auch in zumindest einer der radialen Richtungen, an dem Lamellenträger abstützbar oder abgestützt. Die bei dieser Ausführungsvariante bevorzugte Abstützung auch in zumindest einer der radialen Richtungen kann dabei die Zentrierung des Kraftübertragungselements relativ zu dem Lamellenträger bewirken, ohne dass ein unerwünschter direkter Kontakt zwischen den Betätigungsfingern und dem Lamellenträger zustande kommt.

Um eine besonders sichere Abstützung des Kraftübertragungselements an dem Lamellenträger der Lamellenkupplungsanordnung zu bewirken, ist zumindest einer der Betätigungsfinger, vorzugsweise einer mit einem der zuvor erwähnten Stützelemente zusammenwirkender Betätigungsfinger, in der Art eines den Rand der Aussparung oder/und das Stützelement hintergreifenden Haken oder Hammerkopfes ausgebildet. Eine derartige Geometrie lässt sich relativ einfach an dem Betätigungsfinger bzw. dem Kraftübertragungselement erzeugen. Bei dieser Ausführungsform ist es bevorzugt, wenn sich der Haken oder Hammerkopf in Umfangsrichtung erstreckt. Hierdurch ist eine besonders einfache Herstellung des Hakens oder Hammerkopfes gewährleistet. Alternativ, wenn auch nicht gleichermaßen einfach zu fertigen, kann sich der Haken oder Hammerkopf bei dieser Ausführungsform auch in radialer Richtung erstrecken. Nichtsdestotrotz sind Ausführungsformen denkbar, die diesen - wenn auch nur geringfügig höheren - Fertigungsaufwand rechtfertigen.

Alternativ zu der vorangehend geschilderten Ausführungsform ist bei einer weiteren vorteilhaften Ausführungsform der erfindungsgemäßen Kupplungseinrichtung in zumindest einem der Betätigungsfinger eine Rastvertiefung, eine Rastaussparung oder ein Rastfenster vorgesehen, in die das Stützelement einrastbar oder eingerastet ist. Eine Rastvertiefung, eine Rastaussparung oder ein Rastfenster lässt sich im Rahmen der Fertigung des Kraftübertragungselements sehr einfach erzeugen und ermöglicht ein relativ weites Hervorstehen des als Rastelement fungierenden Stützelements in den Bereich des Betätigungsfingers, so dass eine besonders sichere Abstützung des Kraftübertragungselements über die Betätigungsfinger und das Stützelement an dem Lamellenträger der Lamellenkupplungsanordnung erreicht werden kann.

Um einerseits ein einfaches Verrasten und andererseits eine sichere Abstützung durch das als Rastelement fungierende Stützelement zu erreichen, weist das Stützelement in einer weiteren vorteilhaften Ausführungsform der erfindungsgemäßen Kupplungseinrichtung mindestens eine elastische Rastzunge auf, an der vorzugsweise eine Rastnase vorgesehen ist. So kann beispielsweise mindestens eine Rastzunge zum verrastenden Befestigen des Stützelements an dem Kraftübertragungselement oder dem Lamellenträger vorgesehen sein, während mindestens eine andere Rastzunge an dem Stützelement das Verrasten von Kraftübertragungselement und Lamellenträger bewirkt, wenn die genannten Bauteile zusammengeführt werden. Bei dieser Ausführungsform ist es ferner bevorzugt, wenn das Stützelement einen rahmenartigen Grundkörper aufweist, an dem die zuvor erwähnte Rastzunge angeordnet ist, wobei die Rastzunge vorzugsweise einstückig mit dem rahmenartigen Grundkörper ausgebildet ist. Der rahmenartige Grundkörper hat unterschiedliche Vorteile. So könnte dieser beispielsweise besonders einfach auf einen der Betätigungsfinger aufgesetzt oder aufgeschoben werden, um die Befestigung des Stützelements an dem Kraftübertragungselement bzw. dessen Betätigungsfinger zu bewirken. Umgekehrt ist ein solcher rahmenartiger Grundkörper des Stützelements besonders sicher und fest in die Aussparung in dem Lamellenträger einsetzbar, sofern das Stützelement an dem Lamellenträger befestigt sein soll. Abschließend ist zu erwähnen, dass ein rahmenartiger Grundkörper des Stützelements sicher verhindern kann, dass der Betätigungsfinger in einer der Umfangsrichtungen oder in einer der radialen Richtungen an dem Rand der Aussparung bzw. an dem Lamellenträger anschlägt, wodurch eine übermäßige Geräuschentwicklung und ein größerer Verschleiß in diesem Bereich vermieden wird, wie dies bereits zuvor angedeutet wurde.

In einer weiteren vorteilhaften Ausführungsform der erfindungsgemäßen Kupplungseinrichtung ist das Kraftübertragungselement zumindest in den beiden Axialrichtungen verliersicher an dem Lamellenträger der Lamellenkupplungsanordnung abstützbar oder abgestützt. Ein Herausfallen im Rahmen der Montage ist daher gegenüber den üblicherweise lose eingesetzten Kraftübertragungselementen nicht möglich.

Um einen besonders einfachen Aufbau der Kupplungseinrichtung zu erreichen und die verliersichere Abstützung des Kraftübertragungselements an dem Lamellenträger ohne erhöhten konstruktiven Aufwand zu erreichen, ist das Kraftübertragungselement in einer weiteren vorteilhaften Ausführungsform der erfindungsgemäßen Kupplungseinrichtung derart ausgebildet, dass dieses eine Betätigungskraft zur Betätigung der Lamellenkupplungsanordnung im Verhältnis 1:1 auf die Lamellenkupplungsanordnung überträgt. Um die verliersichere Abstützung sowie den Aufbau noch einfacher zu gestalten, ist die Betätigungskraft zur Betätigung der Lamellenkupplungsanordnung bei dieser Ausführungsform vorzugsweise ohne Hebelübersetzung durch das Kraftübertragungselement übertragbar. So ist es bei dieser Ausführungsform bevorzugt, wenn das Kraftübertragungselement einen im Querschnitt topfartigen Aufbau hat und im Wesentlichen starr ausgebildet ist. Auch ist es bei dieser Ausführungsform insbesondere bevorzugt, wenn das Kraftübertragungselement bei der Übertragung der Betätigungskraft auf die Lamellenkupplungsanordnung im Wesentlichen keinen Eigenkraftbeitrag leistet, wie dies beispielsweise bei einer Tellerfeder der Fall wäre.

Wie bereits zuvor angedeutet, ist die Montage einer Kupplungseinrichtung im Sinne der Erfindung deutlich vereinfacht. Dies ist insbesondere dann der Fall, wenn - wie in einer weiteren besonders bevorzugten Ausführungsform der erfindungsgemäßen Kupplungseinrichtung - das Kraftübertragungselement mit der Lamellenkupplungsanordnung ein zusammenhängend verbaubares oder verbautes Modul ausbildet. Beim Verbauen des Moduls aus Lamellenkupplungsanordnung und Kraftübertragungselement ist das Kraftübertragungselement verliersicher an dem Lamellenträger der Lamellenkupplungsanordnung abgestützt oder abstützbar, so dass das Modul mit anderen Modulen, Baueinheiten oder Baugruppen der Kupplungseinrichtung oder eines Antriebsstrangs verbunden werden kann, ohne dass die Gefahr besteht, dass das Kraftübertragungselement sich von dem Lamellenträger oder der Lamellenkupplungsanordnung löst. Bei dieser Ausführungsform ist es ferner bevorzugt, wenn das erwähnte Modul unter Schaffung einer Anbindung des Kraftübertragungselements an ein Betätigungselement einer Betätigungseinrichtung zur Betätigung der Lamellenkupplungsanordnung mit der Betätigungseinrichtung oder einem der Betätigungseinrichtung benachbarten Bauteil verbindbar oder verbunden ist. Bei dem Betätigungselement handelt es sich vorzugsweise um einen Betätigungskolben, der besonders bevorzugt hydraulisch antreibbar ist. Bei dieser Ausführungsvariante gehören das Kraftübertragungselement und das Betätigungselement somit unterschiedlichen Baueinheiten oder Modulen an, so dass diese nicht gemeinsam oder zeitgleich, sondern vielmehr separat und unabhängig voneinander verbaut werden. Die verliersichere Abstützbarkeit oder Abstützung des Kraftübertragungselements an dem Lamellenträger im Rahmen der Modulbauweise ermöglicht diese bei der Montage sinnvolle Trennung von Betätigungselement und Kraftübertragungselement, zumal die Betätigungseinrichtung häufig bzw. vorteilhafterweise zusammen mit dem Betätigungselement bzw. Betätigungskolben bereits an der Getriebeseite vorgesehen ist.

Um bei einer weiteren bevorzugten Ausführungsform der erfindungsgemäßen Kupplungseinrichtung, die auf der vorangehenden Ausführungsform basiert, ein Mitdrehen des Betätigungselementes und somit - insbesondere bei hydraulisch betätigten Lamellenkupplungsanordnungen - einen unerwünschten Fliehöldruck in der zugeordneten Druckkammer zu vermeiden, ist das Kraftübertragungselement unter Zwischenlage eines Lagers zur Drehmitnahmeentkopplung, das vorzugsweise als Wälzlager ausgebildet ist, an das Betätigungselement anbindbar oder angebunden. Bei dieser Ausführungsform kann das Lager entweder an dem Betätigungselement oder dem Kraftübertragungselement angeordnet sein. Im erstgenannten Fall, der sich als besonders vorteilhaft herausgestellt hat, wäre das Lager somit als Teil der Baueinheit ausgebildet, die die Betätigungseinrichtung mitsamt Betätigungselement umfasst, während das Lager im zweitgenannten Fall dem Modul aus Lamellenkupplungsanordnung und Kraftübertragungselement angehören würde.

Um die Anbindung des Kraftübertragungselements im Rahmen der Montage an das Betätigungselement der Betätigungseinrichtung zu vereinfachen, weist das Modul aus Lamellenkupplungsanordnung und Kraftübertragungselement in einer weiteren besonders bevorzugten Ausführungsform der erfindungsgemäßen Kupplungseinrichtung ein Tragrohr auf, an dem der Lamellenträger in radialer Richtung abstützbar oder abgestützt ist, wobei das Tragrohr mit der Betätigungseinrichtung oder einem der Betätigungseinrichtung benachbarten Bauteil verbindbar oder verbunden ist. Hierbei hat es sich als vorteilhaft herausgestellt, wenn der Lamellenträger rotierbar in radialer Richtung an dem Tragrohr abstützbar ist, wobei dies besonders bevorzugt unter Zwischenlage eines Wälzlagers erfolgt. Somit ist auch das Wälzlager Teil des zuvor erwähnten Moduls. Bei dieser Ausführungsform ist es ferner bevorzugt, wenn der Lamellenträger auch in mindestens einer Axialrichtung an dem Tragrohr abstützbar oder abgestützt ist. Durch die genannte axiale Abstützung des Lamellenträgers wird eine sichere, vorbestimmte axiale Anordnung des Lamellenträgers bewirkt, wenn das Tragrohr mit der Betätigungseinrichtung oder dem benachbarten Bauteil verbunden ist. Als besonders vorteilhaft hat es sich in diesem Zusammenhang herausgestellt, wenn das Tragrohr durch Verschrauben mit der Betätigungseinrichtung oder einem benachbarten Bauteil verbindbar oder verbunden ist. So kann das Tragrohr beispielsweise ein Außen- oder Innengewinde aufweisen, das in oder auf ein entsprechendes Innen- oder Außengewinde an der Betätigungseinrichtung oder dem der Betätigungseinrichtung benachbarten Bauteil ein- oder aufschraubbar ist. Bei dem hier wie auch vor- und nachstehend genannten benachbarten Bauteil der Betätigungseinrichtung kann es sich beispielsweise um ein feststehendes Gehäuse, vorzugsweise um eine Getriebegehäuse, handeln, an dem in diesem Fall besonders bevorzugt auch die Betätigungseinrichtung angeordnet ist.

In einer weiteren vorteilhaften Ausführungsform der erfindungsgemäßen Kupplungseinrichtung weist das zuvor erwähnte Modul einen Torsionsschwingungsdämpfer auf, dessen Ausgangsseite an der Eingangsseite der Lamellenkupplungsanordnung abstützbar oder abgestützt ist. Somit kann auch der Torsionsschwingungsdämpfer als Bestandteil des Moduls in sinnvoller Weise zusammen mit der Lamellenkupplungsanordnung und dem Kraftübertragungselement im Rahmen der Montage verbaut werden. Bei dieser Ausführungsform ist die Ausgangsseite des Torsionsschwingungsdämpfers vorzugsweise verliersicher an der Eingangsseite der Lamellenkupplungsanordnung abstützbar oder abgestützt. Dies kann beispielsweise durch einen Sicherungsring erfolgen, der den in den Lamellenträger eingeführten Torsionsschwingungsdämpfer in axialer Richtung abstützt. Ebenso kann die verliersichere Abstützung durch ein Verschweißen der Ausgangsseite des Torsionsschwingungsdämpfers mit der Eingangsseite der Lamellenkupplungsanordnung bewirkt werden. Bei dieser Ausführungsform ist es ferner bevorzugt, wenn der zuvor erwähnte Lamellenträger, der vorzugsweise die genannten Aussparungen aufweist, die Eingangsseite der Lamellenkupplungsanordnung ausbildet. Auch ist der genannte Lamellenträger vorzugsweise als Außenlamellenträger ausgebildet.

In einer weiteren vorteilhaften Ausführungsform der erfindungsgemäßen Kupplungseinrichtung ist das Modul derart mit der Betätigungseinrichtung oder einem benachbarten Bauteil verbindbar oder verbunden, dass das Kraftübertragungselement unabhängig von der Stellung des Betätigungselements durch das Rückstellelement unmittelbar oder mittelbar gegen das Betätigungselement vorgespannt ist. Auf diese Weise wird eine Trennung des Kraftübertragungselements von dem Betätigungselement während des Betriebes verhindert, so dass ein geräuschvolles Anschlagen des Betätigungselements mittelbar oder unmittelbar an dem Kraftübertragungselement bei einer erneuten Betätigung unterbleibt. Um bei dieser Ausführungsform auch eine Entlastung des Lamellenträgers oder des gegebenenfalls vorgesehenen Stützelementes zu bewirken, ist es hierbei ferner bevorzugt, wenn das Kraftübertragungselement gegen das Betätigungselement, jedoch nicht gegen den Lamellenträger oder das Stützelement vorgespannt ist. Bei dieser Ausführungsvariante findet die tatsächliche Abstützung des Kraftübertragungselements an dem Lamellenträger, gegebenenfalls unter Zwischenlage des Stützelements, somit nur während der Montage statt, während die Abstützung nach der Verbindung des Moduls mit der Betätigungseinrichtung oder einem benachbarten Bauteil unterbleibt. Somit dient die Abstützung bei dieser Ausführungsform ausschließlich als Montagesicherung bei der Montage oder Demontage des Moduls, wobei ein etwaig vorhandenes Stützelement nach der Montage unbelastet und somit weitgehend verschleißfrei an dem Modul verbleiben kann.

In einer weiteren bevorzugten Ausführungsform der erfindungsgemäßen Kupplungseinrichtung ist die Kupplungseinrichtung als Mehrfachkupplungseinrichtung, vorzugsweise als Doppelkupplungseinrichtung, ausgebildet. So weist die als Mehrfachkupplungseinrichtung ausgebildete Kupplungseinrichtung in dieser Ausführungsform eine einer zweiten Getriebeeingangswelle zugeordnete, vorzugsweise ebenfalls nasslaufend ausgebildete, zweite Lamellenkupplungsanordnung zur wahlweisen Drehmomentübertragung zwischen der Antriebseinheit und der zweiten Getriebeeingangswelle auf, wobei die zweite Lamellenkupplungsanordnung über ein zweites Kraftübertragungselement, vorzugsweise hydraulisch, betätigbar ist. Die verliersichere Abstützung auch des zweiten Kraftübertragungselements gestaltet sich relativ einfach, zumal dieses in einer Axialrichtung an dem ersten Kraftübertragungselement verliersicher abgestützt oder abstützbar ist. Hierbei ist es bevorzugt, wenn das zweite Kraftübertragungselement in Axialrichtung zwischen dem ersten Kraftübertragungselement und der Lamellenkupplungsanordnung bzw. dem Lamellenträger der Lamellenkupplungsanordnung angeordnet ist. Bei dieser Ausführungsform muss mithin kein zusätzliches Rast- oder Stützmittel vorgesehen sein, zumal die verliersichere Abstützung des ersten Kraftübertragungselements gleichermaßen die verliersichere Abstützung des zweiten Kraftübertragungselements bewirkt. Bei dieser Ausführungsform ist es ferner bevorzugt, wenn die zweite Lamellenkupplungsanordnung und das zweite Kraftübertragungselement als Teil des zusammenhängend verbaubaren oder verbauten Moduls ausgebildet sind.

In einer weiteren bevorzugten Ausführungsform der erfindungsgemäßen Kupplungseinrichtung weist das zweite Kraftübertragungselement Betätigungsfinger, gegebenenfalls Axialfinger, auf, die sich vorzugsweise durch Aussparungen in einem zweiten Lamellenträger, gegebenenfalls in einem Stütz- oder/und Radialabschnitt des zweiten Lamellenträgers, der zweiten Lamellenkupplungsanordnung erstrecken, um auf das Lamellenpaket der zweiten Lamellenkupplungsanordnung einwirken zu können. Hierbei ist es bevorzugt, wenn der zweite Lamellenträger drehfest mit dem weiter vorne genannten ersten Lamellenträger verbunden ist und beide Lamellenträger besonders bevorzugt als Außenlamellenträger ausgebildet sind. Wie bereits zuvor angedeutet, müssen für den zweiten Lamellenträger und das zweite Kraftübertragungselement keine zusätzlichen Stützelemente vorgesehen sein, um die verliersichere Abstützung des zweiten Kraftübertragungselementes an dem zweiten Lamellenträger zu bewirken. Nichtsdestotrotz ist es bei dieser Ausführungsform bevorzugt, wenn Führungselemente in die Aussparungen in dem zweiten Lamellenträger eingesetzt sind, über die die Betätigungsfinger des zweiten Kraftübertragungselements in Umfangsrichtung oder/und radialer Richtung an dem zweiten Lamellenträger abstützbar oder abgestützt sind. So haben die genannten Führungselemente in den Aussparungen des zweiten Lamellenträgers zwar keine Stützfunktion in Axialrichtung, jedoch können diese die Betätigungsfinger innerhalb der Aussparungen führen und ein Anschlagen in zumindest einer der Umfangsrichtungen oder/und in einer der radialen Richtungen an dem zweiten Lamellenträger verhindern, so dass die Geräuschentwicklung und der Verschleiß an dieser Stelle minimiert ist.

In einer weiteren bevorzugten Ausführungsform der erfindungsgemäßen Kupplungseinrichtung, die als Doppelkupplungseinrichtung ausgebildet ist, handelt es sich vorzugsweise um eine konzentrische Doppelkupplungseinrichtung, bei der die beiden Lamellenkupplungsanordnungen mithin radial geschachtelt angeordnet sind. Mit anderen Worten sind die beiden Lamellenpakete der beiden Lamellenkupplungsanordnungen radial geschachtelt angeordnet.

Die vorliegende Erfindung betrifft ferner einen Antriebsstrang eines Kraftfahrzeugs mit einer Antriebseinheit und einem Getriebe, wobei eine Kupplungseinrichtung der erfindungsgemäßen Art zwischen der Antriebseinheit und dem Getriebe angeordnet ist. Bei der Antriebseinheit handelt es sich vorzugsweise um einen Verbrennungsmotor, besonders bevorzugt einen Kolbenmotor oder einen Hubkolbenmotor, während das Getriebe vorzugsweise als Doppelkupplungsgetriebe ausgebildet ist, wobei die Kupplungseinrichtung in diesem Fall besonders bevorzugt als Doppelkupplungseinrichtung ausgebildet ist.

Die Erfindung wird im Folgenden anhand beispielhafter Ausführungsformen unter Bezugnahme auf die beigefügten Zeichnungen näher erläutert. Es zeigen:
- Fig. 1: eine Seitenansicht einer Ausführungsform der erfindungsgemäßen Kupplungseinrichtung in geschnittener Darstellung,
- Fig. 2: die Kupplungseinrichtung von Fig. 1 vor dem Verbinden des Moduls mit der Betätigungseinrichtung,
- Fig. 3: eine vergrößerte Darstellung des Ausschnitts A von Fig. 2 in einer ersten Ausführungsvariante,
- Fig. 4: eine Draufsicht in Richtung des Pfeils B von Fig. 3 in geschnittener Darstellung,
- Fig. 5: unterschiedliche Ansichten des Stützelements aus den Fig. 3 und 4,
- Fig. 6: den Ausschnitt A von Fig. 2 in vergrößerter Darstellung in einer zweiten Ausführungsvariante,
- Fig. 7: den Ausschnitt A von Fig. 2 in vergrößerter Darstellung in einer dritten Ausführungsvariante,
- Fig. 8: den Ausschnitt A von Fig. 2 in vergrößerter Darstellung in einer vierten Ausführungsvariante,
- Fig. 9: eine Draufsicht in Richtung des Pfeils C von Fig. 8 in geschnittener Darstellung und
- Fig. 10: verschiedene Ansichten des in den Fig. 8 und 9 gezeigten Stützelements.

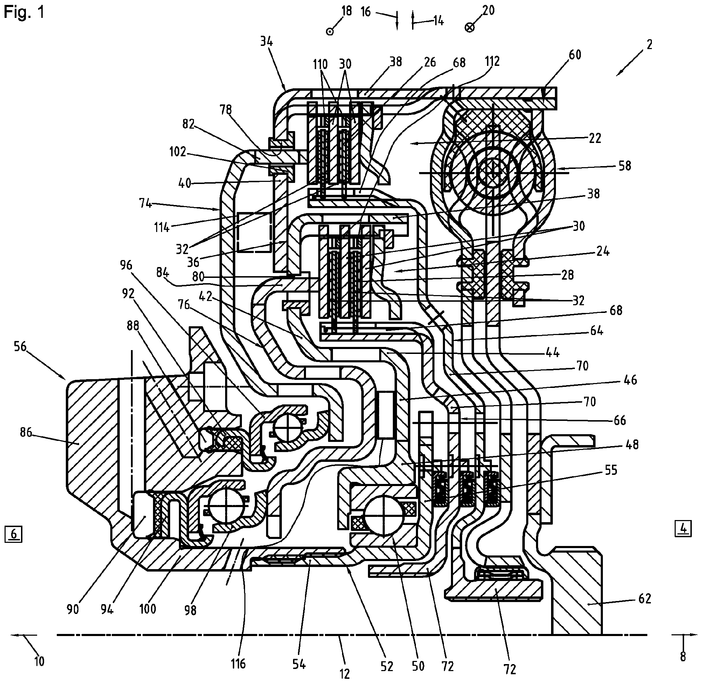

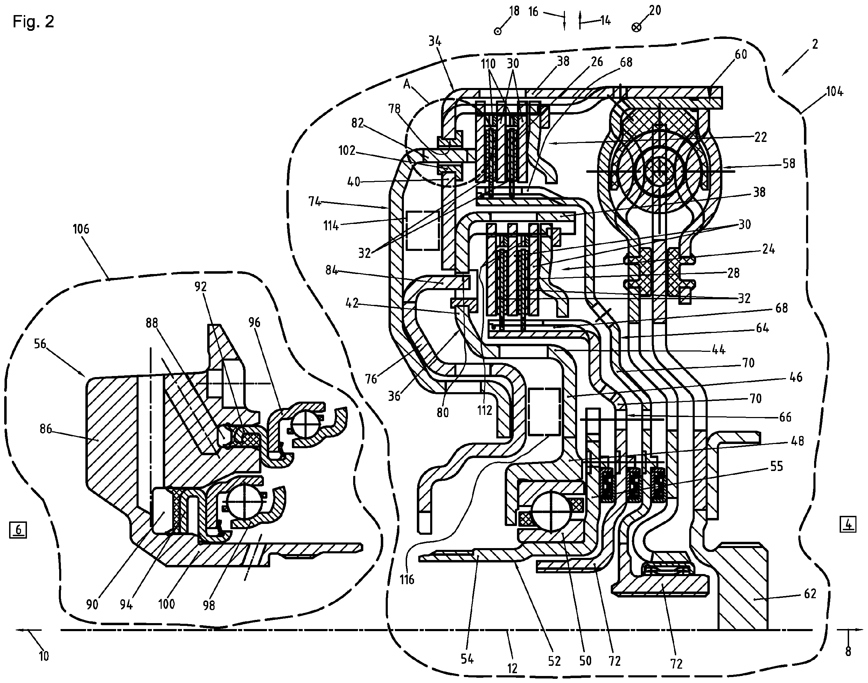

Die Fig. 1 und 2 zeigen eine Ausführungsform der erfindungsgemäßen Kupplungseinrichtung 2. Die Kupplungseinrichtung 2 ist als Mehrfachkupplungseinrichtung ausgebildet, wobei es sich im vorliegenden Fall um eine Doppelkupplungseinrichtung handelt. Genauer gesagt handelt es sich um eine konzentrische Doppelkupplungseinrichtung. Die Kupplungseinrichtung 2 ist innerhalb eines Antriebsstrangs eines Kraftfahrzeugs zwischen einer Antriebseinheit 4, die in der Fig. 1 lediglich schematisch angedeutet ist, und einem Getriebe 6 angeordnet, das in den Figuren ebenfalls lediglich schematisch angedeutet ist. Die Antriebseinheit 4 ist vorzugsweise von einem Verbrennungsmotor, besonders bevorzugt von einem Kolbenmotor oder Hubkolbenmotor, gebildet, während das Getriebe 6 ein Doppelkupplungsgetriebe ist. Die Kupplungseinrichtung 2 ist in den einander entgegengesetzten axialen Richtungen 8, 10 zwischen der Antriebseinheit 4 und dem Getriebe 6 angeordnet, wobei sich die Drehachse 12 der Kupplungseinrichtung 2 in die einander entgegengesetzten axialen Richtungen 8, 10 erstreckt. In den Figuren sind ferner die einander entgegengesetzten radialen Richtungen 14, 16 sowie die einander entgegengesetzten Umfangsrichtungen 18, 20 der Kupplungseinrichtung 2 anhand entsprechender Pfeile dargestellt. Die beiden nicht dargestellten Getriebeeingangswellen des Getriebes 6 erstrecken sich entlang der Drehachse 12 in den axialen Richtungen 8, 10, wobei eine der beiden Getriebeeingangswellen als Hohlwelle ausgebildet ist, durch die sich koaxial die andere Getriebeeingangswelle erstreckt. Die beiden nicht näher dargestellten Getriebeeingangswellen sind somit in radialer Richtung 14, 16 geschachtelt angeordnet.

Die Kupplungseinrichtung 2 weist eine erste Lamellenkupplungsanordnung 22, die der nicht dargestellten ersten Getriebeeingangswelle zugeordnet ist, und eine zweite Lamellenkupplungsanordnung 24 auf, die der nicht dargestellten zweiten Getriebeeingangswelle zugeordnet ist. Da es sich bei der Kupplungseinrichtung 2 um eine konzentrische Doppelkupplungseinrichtung handelt, sind die beiden Kupplungsanordnungen 22, 24 in radialer Richtung 14, 16 geschachtelt angeordnet. Somit kann die erste Lamellenkupplungsanordnung 22 auch als außenliegende Lamellenkupplungsanordnung 22 bezeichnet werden, während die zweite Lamellenkupplungsanordnung 24 auch als innenliegende Lamellenkupplungsanordnung 24 bezeichnet werden kann. Bei beiden Lamellenkupplungsanordnungen 22, 24 handelt es sich um nasslaufende Lamellenkupplungsanordnungen. Außerdem sind die beiden Lamellenkupplungsanordnungen 22, 24 jeweils hydraulisch betätigbar, wie dies später noch näher erläutert werden soll.

Beide Lamellenkupplungsanordnungen 22, 24 weisen jeweils ein Lamellenpaket 26, 28 aus wechselweise aufeinander folgenden Außenlamellen 30 und Innenlamellen 32 auf. Die Außenlamellen 30 sind dabei als reibbelaglose Lamellen oder Stahllamellen ausgebildet, während die Innenlamellen 32 als Lamellen mit Reibbelag oder Reiblamellen ausgebildet sind. Bei dem Reibbelag handelt es sich vorzugsweise um einen Papierreibbelag. Während die erste Lamellenkupplungsanordnung 22 der wahlweisen Drehmomentübertragung zwischen der Antriebseinheit 4 und der ersten Getriebeeingangswelle dient, die hier als außenliegende Hohlwelle ausgebildet ist, dient die zweite Lamellenkupplungsanordnung 24 der wahlweisen Drehmomentübertragung zwischen der Antriebseinheit 4 und der zweiten Getriebeeingangswelle, die in der dargestellten Ausführungsform als innenliegende zweite Getriebeeingangswelle ausgebildet sein soll, wenngleich dies in den Figuren nicht gezeigt ist.

Die beiden Lamellenkupplungsanordnungen 22, 24 weisen jeweils einen Außenlamellenträger, nämlich einen ersten Lamellenträger 34 und einen zweiten Lamellenträger 36 auf. Die beiden Lamellenträger 34, 36 weisen jeweils einen im Wesentlichen rohrförmigen Außenlamellentragabschnitt 38 und einen sich in axialer Richtung 10 an den Außenlamellentragabschnitt 38 anschließenden und in radialer Richtung 16 nach innen erstreckenden Stützabschnitt 40, 42 auf, der aufgrund seiner Erstreckungsrichtung auch als Radialabschnitt bezeichnet werden kann. Die Stützabschnitte 40, 42 dienen dabei der Abstützung des jeweiligen Außenlamellentragabschnitts 38 in radialer Richtung 14, 16. Wie aus Fig. 1 und 2 ersichtlich, sind der erste und zweite Lamellenträger 34, 36 drehfest miteinander verbunden, wobei dies vorzugsweise durch eine Befestigung des Stützabschnitts 40 an dem Stützabschnitt 42 erfolgt. Hierbei hat sich eine Verschweißung des Stützabschnitts 40 mit dem Stützabschnitt 42 als vorteilhaft herausgestellt.

Der Stützabschnitt 42 geht in radialer Richtung 16 nach innen in einen rohrförmigen Abschnitt 44 über, der sich in axialer Richtung 8 erstreckt, um anschließend in einen Radialabschnitt 46 überzugehen, der über eine Stütznabe 48 unter Zwischenlage eines Wälzlagers 50 in radialer Richtung 14, 16 an einem Tragrohr 52 abgestützt ist. Mithin sind der erste und zweite Lamellenträger 34, 36 rotierbar in radialer Richtung 14, 16 und auch in Axialrichtung 8 an dem Tragrohr 52 abstützbar oder abgestützt. Die Abstützung in radialer Richtung 14, 16 erfolgt dabei über einen rohrförmigen Abschnitt 54 des Tragrohrs 52, während die Abstützung in axialer Richtung 8 über einen sich in radialer Richtung 14 ausgehend von dem in axiale Richtung 8 weisenden Ende des rohrförmigen Abschnitts 44 erstreckenden Flanschabschnitts 55. Das Tragrohr 52 ist in axialer Richtung 10 mit einer Betätigungseinrichtung 56 verbindbar oder verbunden, wobei dies vorzugsweise durch Verschrauben erfolgt, wie dies in Fig. 1 angedeutet ist. Auf den Aufbau der Betätigungseinrichtung 56 wird später näher eingegangen. Dank des mit den Lamellenpaketen 26, 28 radial geschachtelt angeordneten rohrförmigen Abschnitts 44 kann ein besonders kompakter und platzsparender Aufbau der Kupplungseinrichtung 2 erzielt werden.

Die beiden Lamellenträger 34, 36 bilden auch die Eingangsseite der jeweiligen Lamellenkupplungsanordnung 22 bzw. 34 aus. Dabei ist die Eingangsseite beider Lamellenkupplungsanordnungen 22, 24 drehfest und verliersicher an einer Ausgangsseite eines Torsionsschwingungsdämpfers 58 abstützbar oder abgestützt. Zu diesem Zweck ist der Außenlamellentragabschnitt 38 der ersten Lamellenkupplungsanordnung 22 in axialer Richtung 8 über den Außenlamellentragabschnitt 38 der zweiten Lamellenkupplungsanordnung 34 hervorstehend ausgebildet, so dass der Torsionsschwingungsdämpfer 58 drehfest innerhalb des Außenlamellentragabschnitts 38 der ersten Lamellenkupplungsanordnung 22 aufgenommen ist. Um die Ausgangsseite des Torsionsschwingungsdämpfers 58 drehfest und verliersicher mit der Eingangsseite der Lamellenkupplungsanordnungen 22, 24 in Form des verlängerten Außenlamellentragabschnitts 38 zu verbinden, ist die Ausgangsseite des Torsionsschwingungsdämpfers 58 mit dem verlängerten Außenlamellentragabschnitt 38 verschweißt, wie dies anhand der Schweißstelle 60 in der Figur angedeutet ist. Die Eingangsseite des Torsionsschwingungsdämpfers 58 ist hingegen über eine Eingangsnabe 62 drehfest mit der Ausgangsseite der Antriebseinheit 4 verbindbar oder verbunden. Dank der Abstützung der Eingangsseite der Lamellenkupplungsanordnung 22 und 24 an dem Tragrohr 52 bleiben die Getriebeeingangswellen weitgehend unbeeinflusst von Schwingungen der Antriebswelle der Antriebseinheit 4 und umgekehrt.

Die Ausgangsseiten der Lamellenkupplungsanordnung 22, 24 werden jeweils von Innenlamellenträgern 64, 66 gebildet, die einen im Wesentlichen rohrförmigen Innenlamellentragabschnitt 68 und einen in Axialrichtung 8 daran anschließenden, sich in radialer Richtung 16 nach innen erstreckenden Stützabschnitt 70 aufweisen, der in radialer Richtung 16 nach innen in eine Ausgangsnabe 72 übergeht, die jeweils mit einer der beiden Getriebeeingangswellen in Drehmitnahmeverbindung steht.

Um eine Betätigungskraft von der zuvor erwähnten Betätigungseinrichtung 56 auf die Lamellenkupplungsanordnungen 22, 24 übertragen zu können, ist der ersten Lamellenkupplungsanordnung 22 ein erstes Kraftübertragungselement 74 zugeordnet, während der zweiten Lamellenkupplungsanordnung 24 ein zweites Kraftübertragungselement 76 zugeordnet ist. Beide Kraftübertragungselemente 74, 76 sind auf der dem jeweiligen Lamellenpaket 26, 28 abgewandten Seite des Stützabschnitts 40 bzw. 42 angeordnet, wobei das zweite Kraftübertragungselement 76 in axialer Richtung 8, 10 zwischen dem Stützabschnitt 42 und dem ersten Kraftübertragungselement 74 angeordnet bzw. eingeschlossen ist. Beide Kraftübertragungselemente 74, 76 übertragen die Betätigungskraft der Betätigungseinrichtung 56 im Verhältnis 1:1 und ohne Hebelübersetzung auf die jeweilige Lamellenkupplungsanordnung 22 bzw. 24, wobei keines der beiden Kraftübertragungselemente 74, 76 einen Eigenkraftbeitrag leistet. So sind die Kraftübertragungselemente 74, 76 insbesondere nicht als federnde Kraftübertragungselemente oder als Tellerfedern ausgebildet, sondern vielmehr als relativ starre Kraftübertragungselemente.

Damit die in axialer Richtung 10 hinter den Stützabschnitten 40, 42 angeordneten Kraftübertragungselemente 74, 76, vorzugsweise unmittelbar, auf das jeweilige Lamellenpaket 26, 28 der Lamellenkupplungsanordnung 22, 24 einwirken können, sind in dem Stützabschnitt 40 in Umfangsrichtung 18, 20 aufeinander folgende Aussparungen 78 vorgesehen, während in dem Stützabschnitt 42 in Umfangsrichtung 18, 20 aufeinander folgende Aussparungen 80 vorgesehen sind. In radialer Richtung 14 außen an den Kraftübertragungselementen 74 und 76 sind hingegen Betätigungsfinger 82, 84 vorgesehen, die sich in axialer Richtung 8 durch die Aussparungen 78, 80 bis zu dem Lamellenpaket 26, 28 der jeweiligen Lamellenkupplungsanordnung 22 bzw. 24 erstrecken, um die Betätigungskraft der Betätigungseinrichtung 56 auf die Lamellenkupplungsanordnungen 22, 24 übertragen zu können. Da sich die Betätigungsfinger 82, 84 im Wesentlichen in axiale Richtung 8 bis zu ihrem freien Ende erstrecken, können diese auch als Axialfinger bezeichnet werden.

An ihrem in radialer Richtung 16 weiter innen angeordneten Abschnitt stehen die beiden Kraftübertragungselemente 74, 76 in Wirkverbindung mit der Betätigungseinrichtung 56, bei der es sich um eine hydraulische Betätigungseinrichtung handelt. Aus Fig. 1 ist ferner ersichtlich, dass die Kraftübertragungselemente 74, 76 in ihrem in radialer Richtung 16 weiter innen liegenden Bereich ausgebaucht sind, um sich zumindest teilweise in den von dem rohrförmigen Abschnitt 44 umgebenen Innenraum zu erstrecken und somit auch teilweise radial geschachtelt mit den Lamellenpaketen 26, 28 der Lamellenkupplungsanordnungen 22, 24 angeordnet zu sein. Wie bereits zuvor angedeutet, wird hierdurch ein besonders kompakter und platzsparender Aufbau erzielt. Die Betätigungseinrichtung 56 selbst weist ein feststehendes Gehäuse 86 auf, das vorzugsweise an einem nicht näher dargestellten Gehäuse des Getriebes 6 befestigt oder als Teil eines solchen ausgebildet ist. In dem feststehenden Gehäuse 86 ist eine erste hydraulisch mit Druck beaufschlagbare erste Druckkammer 88 und eine hydraulisch mit Druck beaufschlagbare zweite Druckkammer 90 ausgebildet, wobei die beiden Druckkammern 88, 90 jeweils als Ringkammern ausgebildet sind, in denen ein ringförmiges erstes Betätigungselement 92 bzw. ein ringförmiges zweites Betätigungselement 94 in den axialen Richtungen 8, 10 verschiebbar geführt ist. Die beiden Betätigungselemente 92, 94 sind als Betätigungskolben ausgebildet.

Das in radialer Richtung 16 innenliegende Ende des ersten Kraftübertragungselements 74 ist in axialer Richtung 10 unter Zwischenlage eines Wälzlagers 96 zur Drehmitnahmeentkopplung in Umfangsrichtung 18, 20 an dem ersten Betätigungselement 92, vorzugsweise unter Vorspannung, abgestützt, während das in radialer Richtung 16 innenliegende Ende des zweiten Kraftübertragungselements 96 unter Zwischenlage eines Wälzlagers 98 in axialer Richtung 10 an dem zweiten Betätigungselement 94, vorzugsweise unter Vorspannung, abgestützt ist. Während die Betätigungselemente 92, 94 jeweils lediglich an dem entsprechenden Wälzlager 96, 98 in axialer Richtung 10 abgestützt sind, sind die Wälzlager 96, 98 hinsichtlich der axialen Richtungen 8, 10 an dem jeweiligen Betätigungselement 92, 94 angeordnet und festgelegt. Alternativ könnten die Betätigungselemente 92, 94 lediglich in axialer Richtung 8 an den Wälzlagern 96, 98 abgestützt sein, während die Wälzlager 96, 98 hinsichtlich der axialen Richtungen 8, 10 an den Kraftübertragungselementen 74, 96 festgelegt sind, die erstgenannte und in Fig. 1 gezeigte Ausführungsvariante ist jedoch bevorzugt.

Im montierten Zustand der Kupplungseinrichtung 2, wie er in Fig. 1 gezeigt ist, ist das Tragrohr 52 mit einem rohrförmigen Abschnitt 100 des Gehäuses 86 oder des Getriebegehäuses verbunden bzw. verschraubt, wobei sich die nicht dargestellten Getriebeeingangswellen in axialer Richtung 8 ausgehend von dem Getriebe 6 durch den rohrförmigen Abschnitt 100 des Gehäuses 86 und den rohrförmigen Abschnitt 54 des Tragrohrs 52 erstrecken, um über die Ausgangsnaben 72 mit der jeweiligen Lamellenkupplungsanordnung 22, 24 in Drehmitnahmeverbindung zu stehen.

Das erste Kraftübertragungselement 74 ist verliersicher an dem als Außenlamellenträger ausgebildeten ersten Lamellenträger 34 der ersten Lamellenkupplungsanordnung 22 abstützbar oder abgestützt. Genauer gesagt ist das erste Kraftübertragungselement 74 mit dem ersten Lamellenträger 34 verrastet, um die verliersichere Abstützbarkeit oder Abstützung des ersten Kraftübertragungselements 74 an dem ersten Lamellenträger 34 zu bewirken. So sind die Betätigungsfinger 82 des ersten Kraftübertragungselements 74 derart verrastend in der Axialrichtung 8 in die Aussparungen 78 einführbar oder eingeführt, dass das gesamte erste Kraftübertragungselement 74 in der entgegengesetzten Axialrichtung 10 über die Betätigungsfinger 82 an dem ersten Lamellenträger 34 verliersicher abstützbar oder abgestützt ist. In der dargestellten Ausführungsform erfolgt jedoch keine unmittelbare Abstützung des ersten Kraftübertragungselements 74 an dem ersten Lamellenträger 34, vielmehr ist das erste Kraftübertragungselement 74 mittelbar über mindestens zwei, vorzugsweise mindestens drei, als Kunststoffelement ausgebildete Stützelemente 102 an dem ersten Lamellenträger 34 in Axialrichtung 10 abstützbar und mit diesem verrastet. In der dargestellten Ausführungsform sind die Stützelemente 102 an dem ersten Lamellenträger 34 befestigt, wobei die Stützelemente 102 in die Aussparungen 78 eingesetzt sind, um abstützend und verrastend mit dem sich in Axialrichtung 8, 10 durch die Aussparung 78 bewegenden Betätigungsfinger 82 zusammenzuwirken. Ergänzend sei jedoch darauf hingewiesen, dass das Stützelement 102 alternativ auch an dem ersten Kraftübertragungselement 74 bzw. an dessen Betätigungsfingern 82 befestigt sein könnte, um abstützend und verrastend mit dem sich relativ zu dem ersten Kraftübertragungselement 74 und somit auch zu dem Stützelement 102 bewegenden ersten Lamellenträger 34 zusammenzuwirken.

Die Vorteile der genannten verliersicheren Abstützung oder Abstützbarkeit des ersten Kraftübertragungselements 74 in axialer Richtung 10 an dem ersten Lamellenträger 34 vermittels der Stützelemente 102 werden insbesondere bei Betrachtung der Fig. 2 deutlich. So bildet das verliersicher an dem ersten Lamellenträger 34 abgestützte erste Kraftübertragungselement 74 mit der ersten und zweiten Lamellenkupplungsanordnung 22, 24 und dem Torsionsschwingungsdämpfer 58 ein zusammenhängend verbaubares oder verbautes Modul 104. Die Betätigungseinrichtung 56 bildet zusammen mit den an den Betätigungselementen 92, 94 befestigten Wälzlagern 96, 98 jedoch eine vor der Endmontage separat von dem Modul 104 ausgebildete Baueinheit 106 aus. Die Grenzen zwischen dem Modul 104 und der Baueinheit 106 sind in der Fig. 2 anhand von gestrichelten Linien angedeutet. Bei der dargestellten Modulbauweise kann zunächst die Baueinheit 106 feststehend an dem nicht dargestellten Getriebegehäuse des Getriebes 6 befestigt werden. Anschließend kann das Modul 104 mit der Baueinheit 106 verbunden bzw. an dieser befestigt werden.

Im Rahmen dieser Montage des Moduls 104 an der Baueinheit 106 könnte sich das erste Kraftübertragungselement 74 in axiale Richtung 10 von dem Modul 104 lösen, wenn keine verliersichere Abstützung in axialer Richtung 10 durch die Stützelemente 102 sichergestellt wäre. So ist das erste Kraftübertragungselement 74 bei der dargestellten Ausführungsform nicht nur in Axialrichtung 8 an den Lamellenkupplungsanordnungen 22, 24, sondern auch in axialer Richtung 10 über die Stützelemente 102 an dem ersten Lamellenträger 34 verliersicher abstützbar, so dass die Handhabung und Montage des Moduls 104 beim Verbinden mit der Baueinheit 106 einfach und sicher durchführbar ist. Jedoch auch das zweite Kraftübertragungselement 76 für die zweite Lamellenkupplungsanordnung 24 ist als Teil des Moduls 104 sowohl in axialer Richtung 8 an der Lamellenkupplungsanordnung 24 als auch in axialer Richtung 10 verliersicher abgestützt oder abstützbar. Dies ist in der dargestellten Ausführungsform dadurch sichergestellt, dass das zweite Kraftübertragungselement 76 - wie bereits zuvor erwähnt - in axialer Richtung 8, 10 zwischen dem zweiten Lamellenträger 36 einerseits und dem ersten Kraftübertragungselement 74 andererseits angeordnet ist, so dass das zweite Kraftübertragungselement 76 in axialer Richtung 10 verliersicher an dem ersten Kraftübertragungselement 74 abgestützt oder abstützbar ist.

Da die verliersichere Abstützung des zweiten Kraftübertragungselements 76 in axialer Richtung 10 bereits über das erste Kraftübertragungselement 74 erfolgt, sind in die den Betätigungsfingern 84 des zweiten Kraftübertragungselements 76 zugeordneten Aussparungen 80 keine Stützelemente im Sinne der Stützelemente 102, sondern vielmehr Führungselemente 108 eingesetzt und dort befestigt. Auch die Führungselemente 108 sind als Kunststoffelemente ausgebildet, bewirken jedoch weder ein Verrasten mit den Betätigungsfingern 84 noch eine verliersichere Abstützung derselben in Axialrichtung 10. Die Führungselemente 108 sind vielmehr rahmenartig ausgebildet, so dass die Betätigungsfinger 84 unter Zwischenlage der Führungselemente 108 in Umfangsrichtung 18, 20 oder/und in radialer Richtung 14, 16 an dem Rand der Aussparungen 80 und somit an dem zweiten Lamellenträger 36 abstützbar oder abgestützt sind. Mithin sollen die Führungselemente 108 an dieser Stelle einen verringerten Verschleiß und ein geräuscharmes Führen der Betätigungsfinger 84 innerhalb der Aussparungen 80 bewirken.

Wie aus den Fig. 1 und 2 ersichtlich, sind mehrere Rückstellelemente 110, 112 vorgesehen, wobei die Rückstellelemente 110 dem Zurückstellen des ersten Kraftübertragungselements 74 in axialer Richtung 10 dienen, während die Rückstellelemente 112 dem Zurückstellen des zweiten Kraftübertragungselements 76 in axialer Richtung 10 dienen. In der dargestellten Ausführungsform wirken die Rückstellelemente 110, 112 jeweils zwischen den Außenlamellen 30 der Lamellenpakete 26, 28, wobei die Rückstellelemente 110, 112 jeweils am Außendurchmesser des jeweiligen Lamellenpakets 26, 28 angeordnet sind. Um dabei den relativ kleinen Bauraum für die Rückstellelemente 110, 112 sinnvoll zu nutzen, sind die Rückstellelemente 110, 112 jeweils als in Umfangsrichtung 18, 20 gewellte und umlaufende Ringfedern ausgebildet. Alternativ wären an dieser Stelle jedoch auch Tellerfedern einsetzbar. Alternativ oder ergänzend könnten auch Rückstellelemente zwischen den Lamellenträgern 34, 36 einerseits und den Kraftübertragungselementen 74, 76 andererseits wirken, wobei diese Rückstellelemente auch als Rückstellfedern, Schraubenfedern oder Tellerfedern ausgebildet sein könnten. Hierbei ist es bevorzugt, wenn die zwischen den Lamellen 30 wirkenden Rückstellelemente 110, 112 durch die zwischen den Lamellenträgern 34, 36 und den Kraftübertragungselementen 74, 76 wirkenden Rückstellelemente ergänzt werden, wobei die letztgenannten Rückstellelemente in den Figuren schematisch angedeutet und mit den Bezugszeichen 114 bzw. 116 versehen sind.

Sowohl das erste Kraftübertragungselement 74 als auch das zweite Kraftübertragungselement 76 ist über die Betätigungsfinger 82 und das Stützelement 102 entgegen der Rückstellkraft der Rückstellelemente 110, 112, 114, 116, die in axialer Richtung 10 wirken, an dem ersten Lamellenträger 34 abstützbar oder abgestützt. Dabei kann das erste Kraftübertragungselement 74 durch die Rückstellkraft der Rückstellelemente 110, 112, 114, 116 entweder gegen den ersten Lamellenträger 34 vorgespannt sein oder ohne eine Vorspannung durch die Rückstellkraft der Rückstellelemente 110, 112, 114, 116 an dem ersten Lamellenträger 34 abstützbar sein, wenn das Modul 104 noch nicht mit der Baueinheit 106 bzw. der Betätigungseinrichtung 56 verbunden ist.

Um das Modul 104 mit der Baueinheit 106 zu verbinden und somit die Kraftübertragungselemente 74, 76 an die zugehörigen Betätigungselemente 92, 94 anzubinden, muss lediglich das Tragrohr 52 in axialer Richtung 10 an den rohrförmigen Abschnitt 100 der mittlerweile am Getriebegehäuse befestigten Baueinheit 106 herangeführt werden, um das Tragrohr 52 anschließend in Umfangsrichtung 20 zu drehen und somit mit dem rohrförmigen Abschnitt 100 zu verschrauben. Mit anderen Worten kann das Modul 104 unter Abstützung des ersten Kraftübertragungselements 74 in axialer Richtung 10 an dem ersten Betätigungselement 92 und unter Abstützung des zweiten Kraftübertragungselements 76 in axialer Richtung 10 an dem zweiten Betätigungselement 94 mit der Baueinheit 106 bzw. der Betätigungseinrichtung 56 verbunden werden, um die genannte Anbindung an die Betätigungselemente 92, 94 zu bewirken. Das Modul 104 ist derart mit der Baueinheit 106 bzw. der Betätigungseinrichtung 56 verbindbar oder verbunden, dass das erste Kraftübertragungselement 74 unabhängig von der Stellung des ersten Betätigungselements 92 in axialer Richtung 8, 10 durch die Rückstellelemente 110 und 114, gegebenenfalls auch 112 und 116, mittelbar über das Wälzlager 96 gegen das erste Betätigungselement 92 vorgespannt ist, wobei die Rückstellkraft der Rückstellelemente 110 und 114, gegebenenfalls auch 112 und 116, jedoch keine Vorspannung des ersten Kraftübertragungselements 74 über die Betätigungsfinger 82 und das Stützelement 102 in axialer Richtung 10 gegen den ersten Lamellenträger 34 bewirkt, sobald das Modul 104 die in Fig. 1 gezeigte Befestigungsposition an der Baueinheit 106 bzw. der Betätigungseinrichtung 56 erreicht hat. Spätestens bei Erreichen der Befestigungsposition nach Fig. 1 erfolgt somit keine Abstützung des ersten Kraftübertragungselements 74 mehr über das Stützelement 102 an dem ersten Lamellenträger 34, so dass das Stützelement 102 im Normalbetrieb der Kupplungseinrichtung 2 unbelastet und somit einem geringen Verschleiß unterworfen ist. Erst bei einer Demontage des Moduls 104 kann das Stützelement 102 wieder seine Wirkung entfalten.

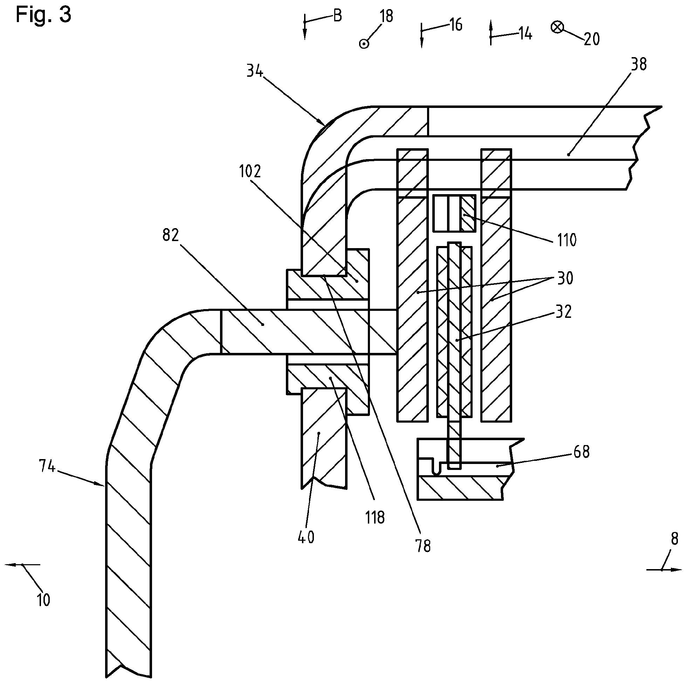

Nachstehend werden vier unterschiedliche Ausführungsvarianten der Kupplungseinrichtung 2 nach den Fig. 1 und 2 unter Bezugnahme auf die Fig. 3 bis 10 beschrieben, wobei die vorangehende Beschreibung der Fig. 1 und 2 auch für die jeweilige Ausführungsvariante gilt.

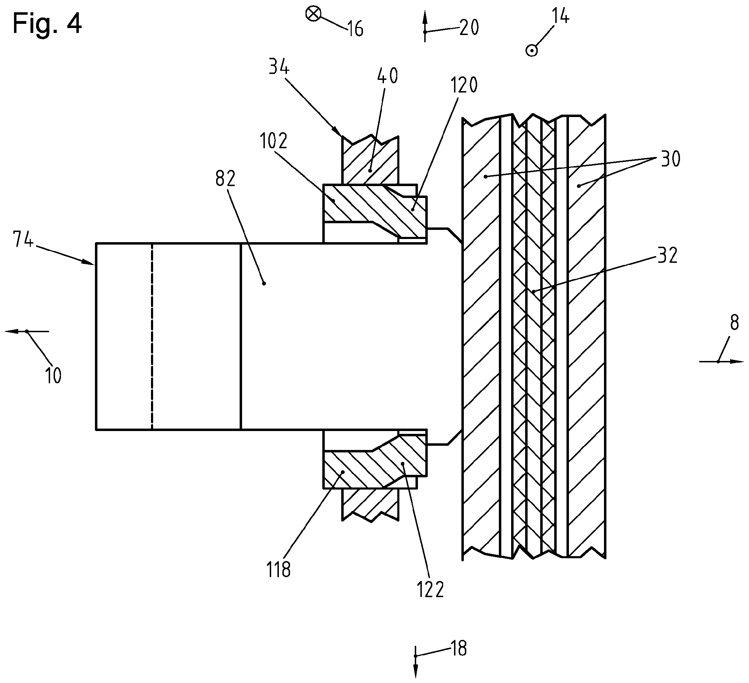

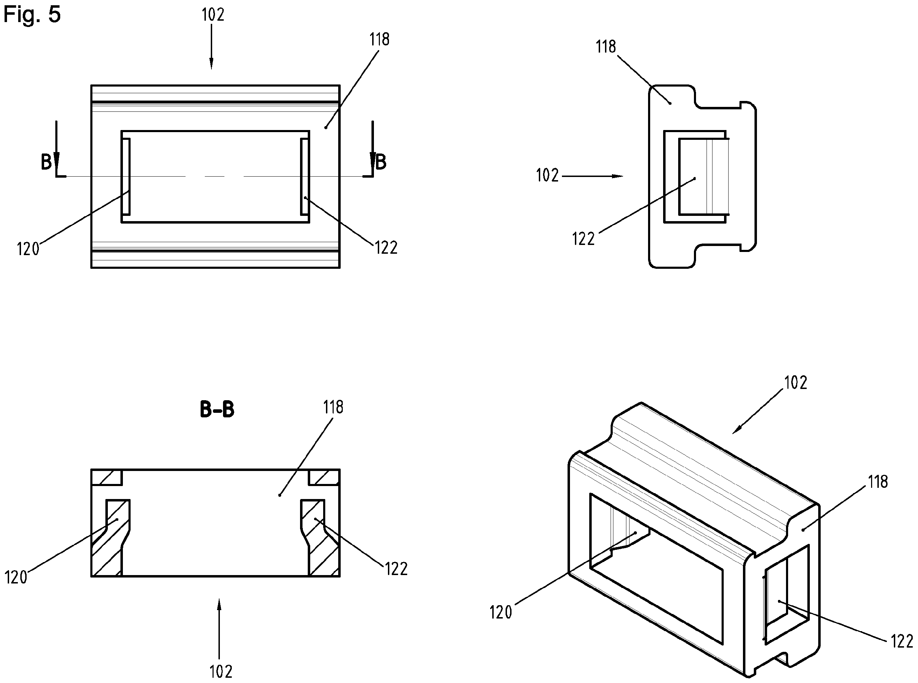

In den Fig. 3 bis 5 ist eine erste Ausführungsvariante zu den Fig. 1 und 2 dargestellt. Wie aus den Fig. 3 und 4 ersichtlich, sind diejenigen Betätigungsfinger 82, die einem der Stützelemente 102 zugeordnet sind, in der Art eines das Stützelement 102 von innen hintergreifenden Hammerkopfes ausgebildet. Wie insbesondere aus Fig. 4 ersichtlich, erstreckt sich der Hammerkopf dabei in den Umfangsrichtungen 18, 20. Man kann auch sagen, dass die Betätigungsfinger 82 an ihrem freien Ende hammerförmig ausgebildet sind. Das in die Aussparung 78 eingesetzte Stützelement 102, das in Fig. 5 in unterschiedlichen Ansichten dargestellt ist, weist im Wesentlichen einen rahmenartigen Grundkörper 118 auf, der eine in den axialen Richtungen 8, 10 durchgehende Öffnung umgibt, durch die sich der Betätigungsfinger 82 hindurch erstrecken kann. Das formschlüssig, vorzugsweise verrastend, in die Aussparung 78 eingesetzte und darin befestigte Stützelement 102 weist ferner zwei in Umfangsrichtung 18, 20 einander gegenüberliegende Rastzungen 120, 122 auf, die an ihrem freien Ende vorzugsweise eine Rastnase aufweisen, wenngleich diese Rastnase in den Fig. 3 bis 5 nicht dargestellt ist. Bei der dargestellten ersten Ausführungsvariante nach den Fig. 3 bis 5 ist das Stützelement 102 ausschließlich in den beiden Umfangsrichtungen 18, 20 über die Rastzungen 120 und 122 mit dem jeweiligen Betätigungsfinger 82 verrastbar oder verrastet, indem sich die elastisch biegbaren Rastzungen 120, 122 nach dem Einführen des Betätigungsfinger 82 in Form eines Hammerkopfes elastisch zurückstellen und den Hammerkopf auf diese Weise hintergreifen, wie dies insbesondere in Fig. 4 zu sehen ist.

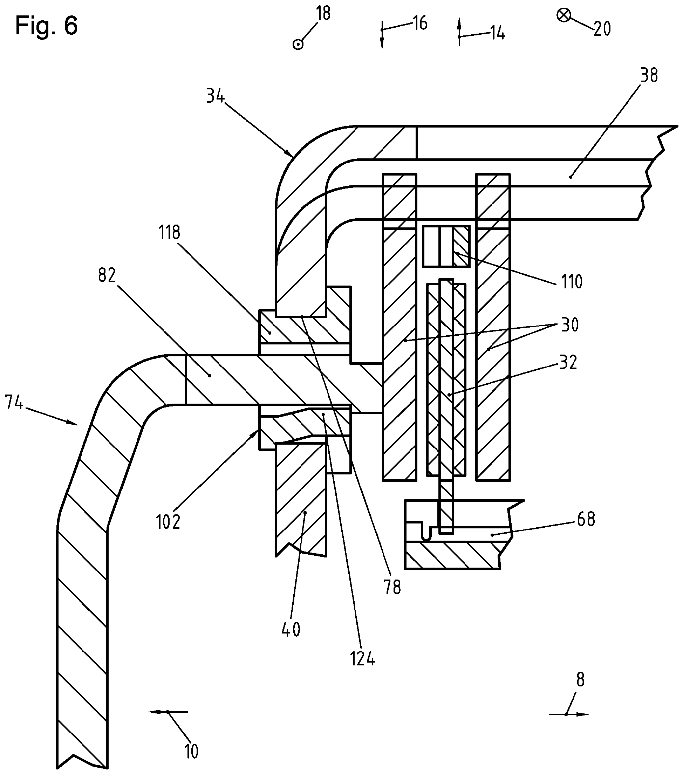

Fig. 6 zeigt eine zweite Ausführungsvariante, die der ersten Ausführungsvariante nach den Fig. 3 bis 5 im Wesentlichen gleicht, so dass nachstehend lediglich auf die Unterschiede eingegangen werden soll und die vorangehende Beschreibung im Übrigen entsprechend gilt.

Bei der zweiten Ausführungsvariante ist der Betätigungsfinger 82 in der Art eines das Stützelement 102 hintergreifenden Hakens ausgebildet, wobei das Stützelement 102 hier in radialer Richtung 16 nach innen durch den hakenförmigen Betätigungsfinger 82 hintergriffen wird. Mit anderen Worten erstreckt sich der Haken in radialer Richtung 16. Bei dieser Ausführungsvariante ist lediglich eine Rastzunge 124 vorgesehen, die in radialer Richtung 14 nach außen mit dem Betätigungsfinger 82 verrastbar ist, indem die Rastzunge 124 nach dem Einführen des Betätigungsfingers 82 in radialer Richtung 14 nach außen in das Stützelement 102 elastisch zurückrastet.

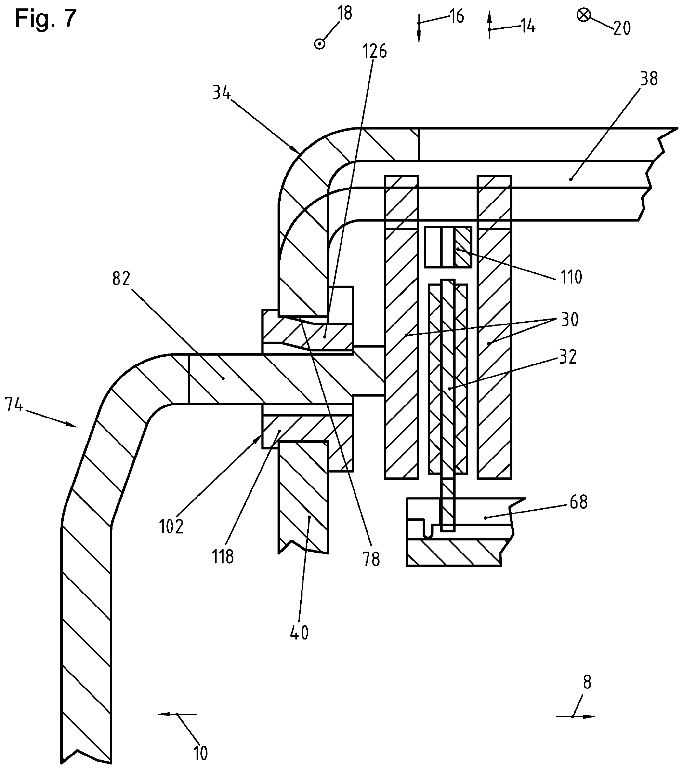

Die dritte Ausführungsvariante nach Fig. 7 entspricht im Wesentlichen der Ausführungsvariante nach Fig. 6, so dass nachstehend lediglich die Unterschiede erläutert werden und die vorangehende Beschreibung im Übrigen entsprechend gilt.

Im Gegensatz zu der zweiten Ausführungsvariante erstreckt sich der in der Art eines Hakens ausgebildete Betätigungsfinger 82 bei der dritten Ausführungsvariante in radialer Richtung 14 nach außen, um das Stützelement 102 zu hintergreifen. In entsprechender Weise ist eine Rastzunge 126 vorgesehen, die ausgehend von dem rahmenförmigen Grundkörper 118 des Stützelements 102 im entspannten Zustand in radialer Richtung 16 nach innen hervorsteht, um den sich in radialer Richtung 14 nach außen erstreckenden Haken des Betätigungsfingers 82 hintergreifen zu können.

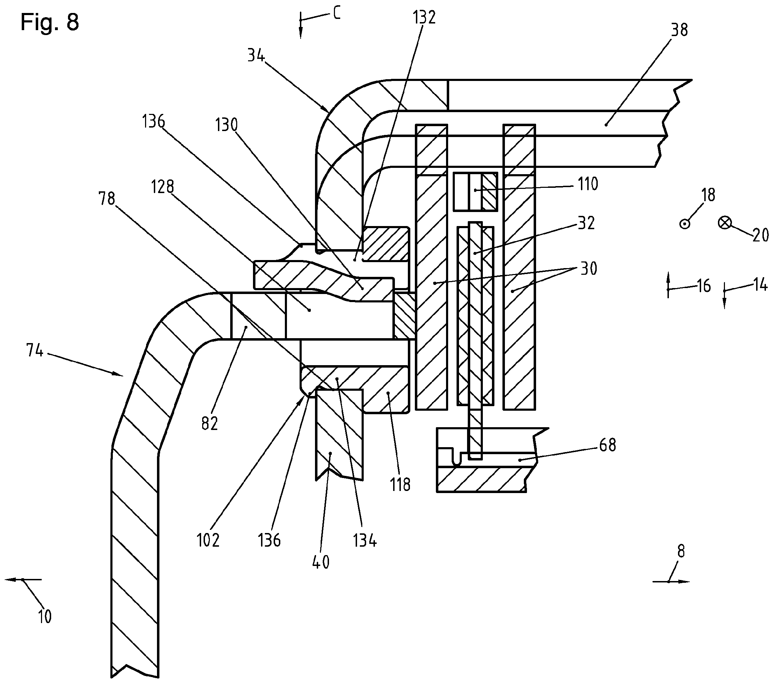

Die Ausführungsvariante nach den Fig. 8 bis 10 entspricht im Wesentlichen den vorangehend beschriebenen Ausführungsvarianten nach den Fig. 3 bis 7, so dass nachstehend lediglich auf die Unterschiede eingegangen werden soll und die vorangehende Beschreibung im Übrigen entsprechend gilt.

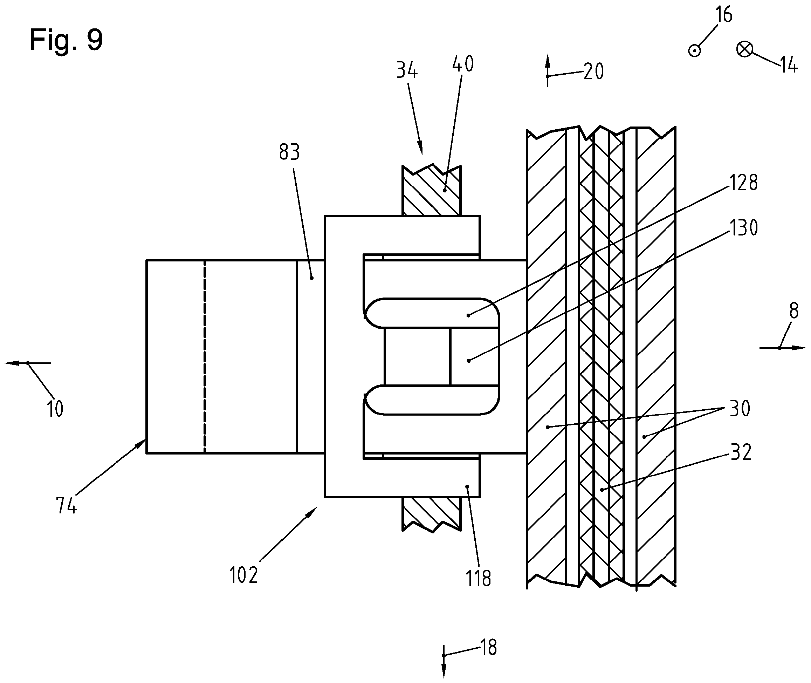

Bei der vierten Ausführungsvariante nach den Fig. 8 bis 10 weist der Betätigungsfinger 82 eine Rastvertiefung, eine Rastaussparung oder ein Rastfenster auf. In der dargestellten Ausführungsform nach Fig. 8 bis 10 soll von einem Rastfenster 128 die Rede sein. Das Rastfenster 128 ist in radialer Richtung 14, 16 durchgehend ausgebildet, wobei an dem rahmenförmigen Grundkörper 118 des Stützelements 102 wiederum eine Rastzunge 130 angeordnet ist, die - wie in den Fig. 8 und 9 gezeigt - in radialer Richtung 16 nach innen in das Rastfenster 128 einrastbar ausgebildet ist. Alternativ kann das Stützelement 102 auch derart in der Aussparung 78 eingesetzt und befestigt sein, dass die Rastzunge 130 in radialer Richtung 14 nach außen in das Rastfenster 128 einrastbar ist.

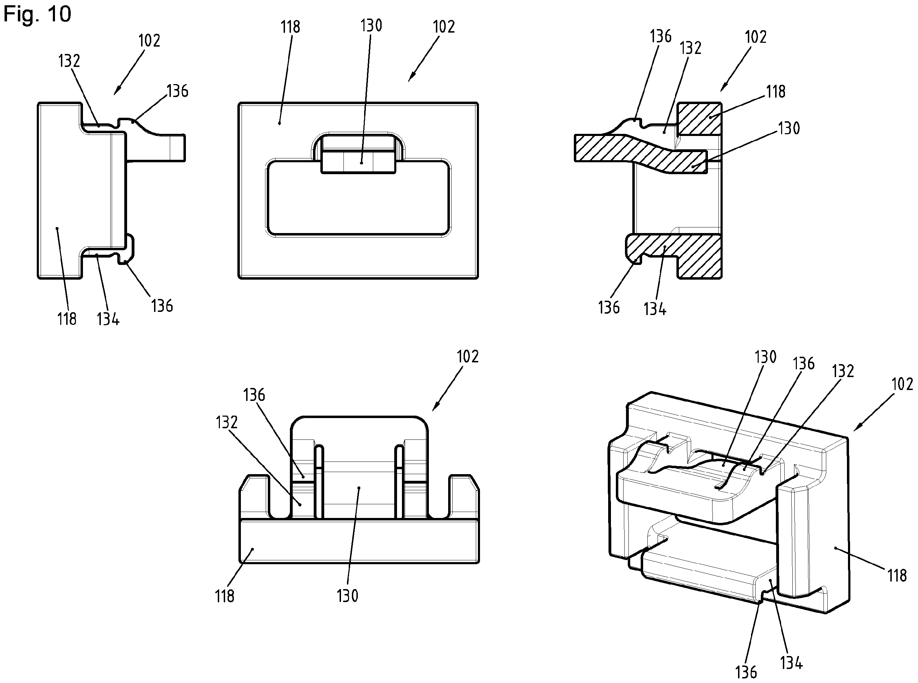

Insbesondere aus den Fig. 8 und 10 ist ersichtlich, dass das Stützelement 102 in der vierten Ausführungsvariante zwei weitere Rastzungen 132, 134 mit Rastnasen 136 aufweist, die dem verrastenden Befestigen des Stützelements 102 innerhalb der Aussparung 78 dienen, so dass das Stützelement 102 lediglich in axialer Richtung 10 in der Aussparung 78 eingedrückt werden muss, um durch die elastischen Rastzungen 132 und 134 in Verbindung mit den Rastnasen 136 ein einfaches Befestigen des Stützelements 102 an dem ersten Lamellenträger 34 zu bewirken. Dieses Konzept kann in vorteilhafter Weise auch auf die vorangehend beschriebenen Stützelemente 102 nach den Ausführungsvarianten in den Fig. 3 bis 7 übertragen werden.

Indem der Grundkörper 118 bei allen Ausführungsvarianten des Stützelements 102 nach den Fig. 1 bis 10 die Öffnung in dem Stützelement 102 in den radialen Richtungen 14 und 16 und den Umfangsrichtungen 18 und 20 begrenzt, kann der Betätigungsfinger 82 stets unter Zwischenlage des Stützelements 102 in beiden Umfangsrichtungen 18, 20 und in zumindest einer der beiden radialen Richtungen 14, 16 an dem ersten Lamellenträger 34 abstützbar oder abgestützt sein, so dass an dieser Stelle sowohl die Geräuschentwicklung als auch der Verschleiß verringert ist.

Unabhängig von der jeweiligen Ausführungsvariante sind das erste und gegebenenfalls zweite Kraftübertragungselement 74, 76 und der erste und gegebenenfalls zweite Lamellenträger 34, 36 metallisch ausgebildet, während das Stützelement 102 - wie bereits zuvor erwähnt - als Kunststoffelement ausgebildet ist. Das Kunststoffelement wurde vorzugsweise zunächst separat hergestellt, um anschließend an einem der beiden genannten Bauteile befestigt zu werden. Es sind vorzugsweise mindestens zwei oder drei, besonders bevorzugt maximal fünf, Stützelemente 102 vorgesehen.

### Bezugszeichenliste

- 2: Kupplungseinrichtung
- 4: Antriebseinheit
- 6: Getriebe
- 8: axiale Richtung
- 10: axiale Richtung
- 12: Drehachse
- 14: radiale Richtung
- 16: radiale Richtung
- 18: Umfangsrichtung
- 20: Umfangsrichtung
- 22: erste Lamellenkupplungsanordnung
- 24: zweite Lamellenkupplungsanordnung
- 26: Lamellenpaket
- 28: Lamellenpaket
- 30: Außenlamellen
- 32: Innenlamellen
- 34: erster Lamellenträger
- 36: zweiter Lamellenträger
- 38: Außenlamellentragabschnitt
- 40: Stützabschnitt
- 42: Stützabschnitt
- 44: rohrförmiger Abschnitt
- 46: Radialabschnitt
- 48: Stütznabe
- 50: Wälzlager
- 52: Tragrohr
- 54: rohrförmiger Abschnitt
- 55: Flanschabschnitt
- 56: Betätigungseinrichtung
- 58: Torsionsschwingungsdämpfer
- 60: Schweißstelle
- 62: Eingangsnabe
- 64: Innenlamellenträger
- 66: Innenlamellenträger
- 68: Innenlamellentragabschnitte
- 70: Stützabschnitte
- 72: Ausgangsnaben
- 74: erstes Kraftübertragungselement
- 76: zweites Kraftübertragungselement
- 78: Aussparungen
- 80: Aussparungen
- 82: Betätigungsfinger
- 84: Betätigungsfinger
- 86: feststehendes Gehäuse
- 88: erste Druckkammer
- 90: zweite Druckkammer
- 92: erstes Betätigungselement
- 94: zweites Betätigungselement
- 96: Wälzlager
- 98: Wälzlager
- 100: rohrförmiger Abschnitt
- 102: Stützelement
- 104: Modul
- 106: Baueinheit
- 108: Führungselemente
- 110: Rückstellelemente
- 112: Rückstellelemente
- 114: Rückstellelemente
- 116: Rückstellelemente
- 120: Rastzunge
- 122: Rastzunge
- 124: Rastzunge
- 126: Rastzunge
- 128: Rastfenster
- 130: Rastzunge
- 132: Rastzunge
- 134: Rastzunge
- 136: Rastnase

- A: Ausschnitt
- B: Pfeil
- C: Pfeil

## Patentansprüche

1. Kupplungseinrichtung (2), vorzugsweise Mehrfachkupplungseinrichtung, besonders bevorzugt Doppelkupplungseinrichtung, zur Anordnung in einem Antriebsstrang eines Kraftfahrzeugs zwischen einer Antriebseinheit (4) und einem Getriebe (6), die mindestens eine einer Getriebeeingangswelle zugeordnete Lamellenkupplungsanordnung (22) zur wahlweisen Drehmomentübertragung zwischen der Antriebseinheit (4) und der Getriebeeingangswelle aufweist, wobei die Lamellenkupplungsanordnung (22) über ein Kraftübertragungselement (74) betätigbar ist, das Betätigungsfinger (82) aufweist, die sich durch Aussparungen (78) in einem Lamellenträger (34) erstrecken, und das verliersicher an dem Lamellenträger (34) der Lamellenkupplungsanordnung (22) abstützbar oder abgestützt ist, **dadurch gekennzeichnet, dass** Rastmittel an dem Kraftübertragungselement (74) oder/und dem Lamellenträger (34) derart vorgesehen sind, dass die Betätigungsfinger (82) verrastend in die Aussparungen (78) einführbar oder eingeführt sind.

2. Kupplungseinrichtung (2) nach Anspruch 1, **dadurch gekennzeichnet, dass** die Lamellenkupplungsanordnung (22) hydraulisch betätigbar oder/und nasslaufend ausgebildet ist.

3. Kupplungseinrichtung (2) nach einem der Ansprüche 1 oder 2, **dadurch gekennzeichnet, dass** die Betätigungsfinger (82) als Axialfinger ausgebildet oder/und die Aussparungen (78) in einem Stütz- oder/und Radialabschnitt (40) des Lamellenträgers (34) vorgesehen sind, wobei die Betätigungsfinger (82) vorzugsweise derart verrastend in einer Axialrichtung (8) in die Aussparungen (78) einführbar oder eingeführt sind, dass das Kraftübertragungselement (74) in der entgegengesetzten Axialrichtung (10) über die Betätigungsfinger (82) an dem Lamellenträger (34) verliersicher abstützbar oder abgestützt ist.

4. Kupplungseinrichtung (2) nach einem der vorangehenden Ansprüche, **dadurch gekennzeichnet, dass** das Kraftübertragungselement (74), vorzugsweise die Betätigungsfinger (82), entgegen der Rückstellkraft zumindest eines, gegebenenfalls zwischen dem Lamellenträger (34) und dem Kraftübertragungselement (74) oder zwischen den Lamellen (30) der Lamellenkupplungsanordnung (22) wirkenden, Rückstellelements (110, 114), besonders bevorzugt einer Rückstellfeder, einer Schraubenfeder, einer Tellerfeder oder einer in Umfangsrichtung (18, 20) gewellten Ringfeder, an dem Lamellenträger (34) abstützbar oder abgestützt ist.

5. Kupplungseinrichtung (2) nach einem der vorangehenden Ansprüche, **dadurch gekennzeichnet, dass** das Kraftübertragungselement (74) mittelbar über mindestens ein, vorzugsweise als Kunststoffelement ausgebildetes, Stützelement (102) abstützbar und gegebenenfalls verrastbar ist, das vorzugsweise an dem Kraftübertragungselement (74) oder dem Lamellenträger (34), gegebenenfalls verrastend, befestigbar oder befestigt ist und besonders bevorzugt in eine der Aussparungen (78) einsetzbar oder eingesetzt ist und abstützend und gegebenenfalls verrastend mit dem jeweiligen Betätigungsfinger (82) zusammenwirkt.

6. Kupplungseinrichtung (2) nach Anspruch 5, **dadurch gekennzeichnet, dass** das Stützelement (102) in Umfangsrichtung (18, 20), vorzugsweise in beiden Umfangsrichtungen (18, 20), besonders bevorzugt ausschließlich in Umfangsrichtung (18, 20), mit dem jeweiligen Betätigungsfinger (82) verrastbar oder verrastet ist oder/und die Betätigungsfinger (82) unter Zwischenlage des Stützelements (102) in Umfangsrichtung (18, 20), vorzugsweise in beiden Umfangsrichtungen (18, 20), besonders bevorzugt auch in zumindest einer der radialen Richtungen (14, 16), an dem Lamellenträger (34) abstützbar oder abgestützt sind.

7. Kupplungseinrichtung (2) nach einem der vorangehenden Ansprüche, **dadurch gekennzeichnet, dass** zumindest einer der Betätigungsfinger (82) in der Art eines den Rand der Aussparung (78) oder/und das Stützelement (102) hintergreifenden Hakens oder Hammerkopfes ausgebildet ist, wobei sich der Haken oder Hammerkopf vorzugsweise in Umfangsrichtung (18, 20) oder in radialer Richtung (14, 16) erstreckt.

8. Kupplungseinrichtung (2) nach einem der Ansprüche 5 oder 6, **dadurch gekennzeichnet, dass** in zumindest einem der Betätigungsfinger (82) eine Rastvertiefung, eine Rastaussparung oder ein Rastfenster (128) vorgesehen ist, in die das Stützelement (102) einrastbar oder eingerastet ist, oder/und das Stützelement (102) mindestens eine elastische Rastzunge (120, 122, 124, 126, 130, 132, 134) aufweist, an der vorzugsweise eine Rastnase (136) vorgesehen und die besonders bevorzugt an einem rahmenartigen Grundkörper (118) des Stützelements (102) angeordnet ist.

9. Kupplungseinrichtung (2) nach einem der vorangehenden Ansprüche, **dadurch gekennzeichnet, dass** das Kraftübertragungselement (74) zumindest in den beiden Axialrichtungen (8, 10) verliersicher an dem Lamellenträger (34) der Lamellenkupplungsanordnung (22) abstützbar oder abgestützt ist.

10. Kupplungseinrichtung (2) nach einem der vorangehenden Ansprüche, **dadurch gekennzeichnet, dass** eine Betätigungskraft zur Betätigung der Lamellenkupplungsanordnung (22), vorzugsweise ohne Hebelübersetzung, im Verhältnis 1:1 durch das Kraftübertragungselement (74) übertragbar ist, wobei das Kraftübertragungselement (74) besonders bevorzugt keinen Eigenkraftbeitrag leistet.

11. Kupplungseinrichtung (2) nach einem der vorangehenden Ansprüche, **dadurch gekennzeichnet, dass** das Kraftübertragungselement (74) mit der Lamellenkupplungsanordnung (22) ein zusammenhängend verbaubares oder verbautes Modul (104) ausbildet, das vorzugsweise unter Schaffung einer Anbindung des Kraftübertragungselements (74) an ein Betätigungselement (92), gegebenenfalls an einen Betätigungskolben, einer Betätigungseinrichtung (56) zur Betätigung der Lamellenkupplungsanordnung (22) mit der Betätigungseinrichtung (56) verbindbar oder verbunden ist, wobei das Kraftübertragungselement (74) besonders bevorzugt unter Zwischenlage eines Lagers, gegebenenfalls eines Wälzlagers (96), zur Drehmitnahmeentkopplung, das gegebenenfalls an dem Betätigungselement (92) oder dem Kraftübertragungselement (74) angeordnet ist, an das Betätigungselement (92) anbindbar oder angebunden ist.

12. Kupplungseinrichtung (2) nach Anspruch 11, **dadurch gekennzeichnet, dass** das Modul (104) ein Tragrohr (52) aufweist, an dem der Lamellenträger (34), vorzugsweise rotierbar, besonders bevorzugt unter Zwischenlage eines Wälzlagers (50), in radialer Richtung (14, 16), gegebenenfalls auch in mindestens einer Axialrichtung (8), abstützbar oder abgestützt ist, wobei das Tragrohr (52) mit der Betätigungseinrichtung (56) verbindbar oder verbunden, gegebenenfalls verschraubbar oder verschraubt, ist.

13. Kupplungseinrichtung (2) nach einem der Ansprüche 11 oder 12, **dadurch gekennzeichnet, dass** das Modul (104) einen Torsionsschwingungsdämpfer (58) aufweist, dessen Ausgangsseite, vorzugsweise verliersicher, an der Eingangsseite der Lamellenkupplungsanordnung (22), besonders bevorzugt an dem Lamellenträger (34), abstützbar oder abgestützt ist oder/und das Modul (104) derart mit der Betätigungseinrichtung (56) verbindbar oder verbunden ist, dass das Kraftübertragungselement (74) unabhängig von der Stellung des Betätigungselements (92) durch das Rückstellelement (110, 114) unmittelbar oder mittelbar gegen das Betätigungselement (92), vorzugsweise jedoch nicht gegen den Lamellenträger (34) oder das Stützelement (102), vorgespannt ist.

14. Kupplungseinrichtung (2), nämlich Mehrfachkupplungseinrichtung, nach einem der vorangehenden Ansprüche, **dadurch gekennzeichnet, dass** eine einer zweiten Getriebeeingangswelle zugeordnete, vorzugsweise nasslaufende, zweite Lamellenkupplungsanordnung (24) zur wahlweisen Drehmomentübertragung zwischen der Antriebseinheit (4) und der zweiten Getriebeeingangswelle vorgesehen ist, wobei die zweite Lamellenkupplungsanordnung (24) über ein zweites Kraftübertragungselement (76), vorzugsweise hydraulisch, betätigbar ist, das in einer Axialrichtung (10) an dem ersten Kraftübertragungselement (74) verliersicher abgestützt oder abstützbar ist, und die zweite Lamellenkupplungsanordnung (24) und das zweite Kraftübertragungselement (76) besonders bevorzugt als Teil des zusammenhängend verbaubaren oder verbauten Moduls (104) ausgebildet sind.

15. Kupplungseinrichtung (2) nach Anspruch 14, **dadurch gekennzeichnet, dass** das zweite Kraftübertragungselement (76) Betätigungsfinger (84), gegebenenfalls Axialfinger, aufweist, die sich vorzugsweise durch Aussparungen (80) in einem zweiten Lamellenträger (36), gegebenenfalls in einem Stütz- oder/und Radialabschnitt (42) des zweiten Lamellenträgers (36), der zweiten Lamellenkupplungsanordnung (24) erstrecken, wobei besonders bevorzugt Führungselemente (108), die gegebenenfalls rahmenartig oder/und als Kunststoffelemente ausgebildet sind, in die Aussparungen (80) eingesetzt sind, über die die Betätigungsfinger (84) in Umfangsrichtung (18, 20) oder/und radialer Richtung (14, 16) an dem zweiten Lamellenträger (36) abstützbar oder abgestützt sind.

## Claims

1. Clutch device (2), preferably a multiple clutch device, especially preferably a dual clutch device, for arrangement in a drive train of a motor vehicle between a drive unit (4) and a transmission (6), which clutch device has at least one multiple-disk clutch arrangement (22), assigned to a transmission input shaft, for selective torque transfer between the drive unit (4) and the transmission input shaft, the multiple-disk clutch arrangement (22) being actuable via a force transfer element (74) which has actuation fingers (82) which extend through clearances (78) in a disk carrier (34), and which is supportable or supported captively on the disk carrier (34) of the multiple-disk clutch arrangement (22), **characterized in that** latching means are provided on the force transfer element (74) or/and the disk carrier (34) in such a way that the actuation fingers (82) are introducible or introduced latchingly into the clearances (78).

2. Clutch device (2) according to Claim 1, **characterized in that** the multiple-disk clutch arrangement (22) is actuable hydraulically and/or is designed to be wet-running.

3. Clutch device (2) according to either one of Claims 1 and 2, **characterized in that** the actuation fingers (82) are designed as axial fingers or/and the clearances (78) are provided in a supporting and/or radial portion (40) of the disk carrier (34), the actuation fingers (82) preferably being introducible or introduced into the clearances (78) latchingly in an axial direction (8), in such a way that the force transfer element (74) is supportable or supported captively on the disk carrier (34) in the opposite axial direction (10) via the actuation fingers (82).

4. Clutch device (2) according to one of the preceding claims, **characterized in that** the force transfer element (74), preferably the actuation fingers (82), are supportable or supported on the disk carrier (34) counter to the restoring force of at least one restoring element (110, 114), especially preferably a restoring spring, helical spring, cup spring or annular spring wavy in the circumferential direction (18, 20), which acts, if appropriate, between the disk carrier (34) and the force transfer element (74) or between the disks (30) of the multiple-disk clutch arrangement (22).

5. Clutch device (2) according to one of the preceding claims, **characterized in that** the force transfer element (74) is supportable and, if appropriate, latchable indirectly via at least one supporting element (102) which is preferably designed as a plastic element and which is preferably fastenable or fastened, if appropriate latchingly, to the force transfer element (74) or to the disk carrier (34) and especially preferably is insertable or inserted into one of the clearances (78) and cooperates supportingly and, if appropriate, latchingly with the respective actuation finger (82).

6. Clutch device (2) according to Claim 5, **characterized in that** the supporting element (102) is latchable or latched with the respective actuation finger (82) in the circumferential direction (18, 20), preferably in both circumferential directions (18, 20), especially preferably only in the circumferential direction (18, 20), and/or the actuation fingers (82) are supportable or supported on the disk carrier (34) in the circumferential direction (18, 20), preferably in both circumferential directions (18, 20), especially preferably also in at least one of the radial directions (14, 16), with the supporting element (102) being interposed.

7. Clutch device (2) according to one of the preceding claims, **characterized in that** at least one of the actuation fingers (82) is designed in the manner of a hook or hammerhead engaging behind the margin of the clearance (78) and/or the supporting element (102), the hook or hammerhead preferably extending in the circumferential direction (18, 20) or in the radial direction (14, 16).

8. Clutch device (2) according to either of Claims 5 and 6, **characterized in that** a latching depression, latching clearance or latching window (128), into which the supporting element (102) is latchable or latched, is provided in at least one of the actuation fingers (82), and/or the supporting element (102) has at least one elastic latching tongue (120, 122, 124, 126, 130, 132, 134), on which preferably a latching nose (136) is provided and which is arranged especially preferably on a frame-like basic body (118) of the supporting element (102) .

9. Clutch device (2) according to one of the preceding claims, **characterized in that** the force transfer element (74) is supportable or supported captively on the disk carrier (34) of the multiple-disk clutch arrangement (22) at least in the two axial directions (8, 10).

10. Clutch device (2) according to one of the preceding claims, **characterized in that** an actuation force for actuating the multiple-disk clutch arrangement (22) can be transferred by the force transfer element (74) in the ratio of 1:1, preferably without leverage, the force transfer element (74) especially preferably contributing no intrinsic force.

11. Clutch device (2) according to one of the preceding claims, **characterized in that** the force transfer element (74) forms with the multiple-disk clutch arrangement (22) a coherently fittable or fitted module (104) which, preferably providing a tie-up of the force transfer element (74) to an actuation element (92), if appropriate to an actuation piston, of an actuation device (56) for actuating the multiple-disk clutch arrangement (22), is connectable or connected to the actuation device (56), the force transfer element (74) especially preferably being tieable or tied to the actuation element (92), with a bearing, if appropriate a rolling bearing (96), being interposed for rotary take-up decoupling, which, if appropriate, is arranged on the actuation element (92) or on the force transfer element (74).

12. Clutch device (2) according to Claim 11, **characterized in that** the module (104) has a carrying tube (52), on which the disk carrier (34) is supportable or supported preferably rotatably, especially preferably with a rolling bearing (50) interposed, in the radial direction (14, 16), if appropriate also in at least one axial direction (8), the carrying tube (52) being connectable or connected, if appropriate screwable or screwed, to the actuation device (56).

13. Clutch device (2) according to either one of Claims 11 and 12, **characterized in that** the module (104) has a torsional vibration damper (58), the output side of which is supportable or supported preferably captively on the input side of the multiple-disk clutch arrangement (22), especially preferably on the disk carrier (34), and/or the module (104) is connectable or connected to the actuation device (56) in such a way that the force transfer element (74) is pretensioned directly or indirectly against the actuation element (92), but preferably not against the disk carrier (34) or the supporting element (102), by the restoring element (110, 114) independently of the position of the actuation element (92).

14. Clutch device (2), to be precise the multiple clutch device, according to one of the preceding claims, **characterized in that** a preferably wet-running second multiple-disk clutch arrangement (24), assigned to a second transmission input shaft, for selective torque transfer between the drive unit (4) and the second transmission input shaft is provided, the second multiple-disk clutch arrangement (24) being actuable preferably hydraulically via a second force transfer element (76) which is supported or supportable captively in an axial direction (10) on the first force transfer element (74), and the second multiple-disk clutch arrangement (24) and the second force transfer element (76) especially preferably being designed as part of the coherently fittable or fitted module (104).

15. Clutch device (2) according to Claim 14, **characterized in that** the second force transfer element (76) has actuation fingers (84), if appropriate axial fingers, which preferably extend through clearances (80) in a second disk carrier (36), if appropriate in a supporting and/or radial portion (42) of the second disk carrier (36), of the second multiple-disk clutch arrangement (24), especially preferably guide elements (108), which, if appropriate, are of frame-like design and/or are designed as plastic elements, being inserted into the clearances (80), via which guide elements the actuation fingers (84) are supportable or supported on the second disk carrier (36) in the circumferential direction (18, 20) and/or radial direction (14, 16).

## Revendications

1. Dispositifde couplage (2), de préférencedispositif de couplage multiple, de façon particulièrement préféréedispositif de couplage double, à agencerdans une chaîne cinématiqued'un véhicule automobileentre une unité d'entraînement (4) et une boîte de vitesses (6), comportant au moins unagencement de couplage à lamelles (22) associé à un arbre d'entrée de boîte de vitesses pour la transmission facultative du couple de rotationentre l'unité d'entraînement (4) et l'arbre d'entrée de boîte de vitesses, l'agencement de couplage à lamelles (22) pouvant être actionné via un élément de transmission de force (74) comportant des doigts d'actionnement (82) s'étendant à travers des évidements (78),dans un support de lamelles (34) et maintenu ou pouvant être maintenude façon sécurisée contre la perteau niveau dusupport de lamelles (34) de l'agencement de couplage à lamelles (22),caractérisé en ce quedes moyens d'encliquetagesont prévus au niveau de l'élément de transmission de force (74) et/oudu support de lamelles(34) de telle sorte que les doigts d'actionnement (82) puissent être introduits ou soient introduits de façon encliquetéedans les évidements (78).

2. Dispositifde couplage (2) selon la revendication 1, **caractérisé en ce que** l'agencement de couplage à lamelles(22) est réalisé de façon à pouvoir être actionné de façon hydraulique et/ou fonctionne en mouvement lubrifié.

3. Dispositifde couplage (2) selon l'unequelconque des revendications 1 ou 2, caractérisé en ce queles doigts d'actionnement (82) sont réalisés sous la forme de doigts axiaux et/ouque les évidements (78) sont prévus dans une section d'appui et/ou radiale (40) du support de lamelles (34),lesdoigts d'actionnement (82) pouvant être introduits ou étant introduits de préférencede telle sortede façon encliquetée dans une direction axiale (8) dans les évidements (78) que l'élément de transmission de force (74) puisse être soutenu ou soit soutenu dans la direction axiale opposée (10) de façon sécurisée contre la perte au niveau du support de lamelles (34), via les doigts d'actionnement (82).

4. Dispositifde couplage (2) selon l'une quelconque des revendications précédentes, caractérisé en ce quel'élément de transmission de force (74), de préférence les doigts d'actionnement (82), puissent être soutenus ou soient soutenus au niveau du support de lamelles (34) à l'encontre de la force de rappeld'au moinsun élément de rappel (110, 114), agissant le cas échéant entre le support de lamelles (34) et l'élément de transmission de force (74) ou entre les lamelles (30) de l'agencement de couplage à lamelles (22), ledit élément de rappel prenant de façon particulièrement préféréela forme d'un ressort de rappel, d'un ressort à vis, d'un ressort Belleville ou d'un ressort annulaire ondulant dans la direction périphérique (18, 20).

5. Dispositifde couplage (2) selon l'unequelconque des revendications précédentes, caractérisé en ce quel'élément de transmission de force (74) peut être soutenu indirectement et peut être encliqueté le cas échéant via au moinsun élément de soutien (102), de préférence réalisé sous la forme d'un élément en matière plastique,ledit élément de soutien pouvant être fixé ou étant fixé, le cas échéant de façon encliquetée, de préférenceau niveau de l'élément de transmission de force (74) ou du support de lamelles (34)et pouvant être inséré ou étant inséré de façon particulièrement préféréedans un des évidements (78) et interagissant de façon soutenante et le cas échéantde façon encliquetéeavec ledoigtd'actionnement (82) respectif.

6. Dispositifde couplage (2) selon la revendication 5, **caractérisé en ce que** l'élément de soutien (102) est encliquetable ou encliqueté avec le doigt d'actionnement (82) respectif dans la direction périphérique(18, 20), de préférence dans les deux directions périphériques (18, 20), de façon particulièrement préféréeexclusivement dans la direction périphérique(18, 20) et/ou que les doigts d'actionnement (82)peuvent être soutenus ou sont soutenus au niveau du support de lamelles (34) en interposant l'élément de soutien (102) dans la direction périphérique (18, 20), de préférencedans les deux directions périphériques (18, 20), de façon particulièrement préféréeégalement dansau moinsune des directions radiales (14, 16).

7. Dispositifde couplage (2) selon l'unequelconque des revendications précédentes, **caractérisé en ce qu'**au moinsun des doigts d'actionnement (82) est réalisé à la façon d'un crochet ou d'une tête de marteau accrochant par l'arrière le bord de l'évidement (78) et/ou l'élément de soutien (102),le crochetou la tête de marteaus'étendant de préférencedans la direction périphérique (18, 20) ou dans la direction radiale (14, 16).

8. Dispositifde couplage (2) selon l'une quelconque des revendications 5 ou 6, **caractérisé en ce qu'**un renfoncement d'encliquetage, un évidement d'encliquetage ou une fenêtre d'encliquetage (128) est prévu dans au moinsun des doigts d'actionnement (82) et dans lequel l'élément de soutien (102) peut être encliqueté ou est encliqueté et/ouque l'élément de soutien (102) comporte au moinsun bec d'encliquetage (120, 122, 124, 126, 130, 132, 134) élastique au niveau duquel de préférenceun bec d'encliquetage (136) est prévu et disposé de façon particulièrement préféréeau niveau d'un corpsde base(118) de type cadre de l'élément de soutien (102).

9. Dispositif de couplage (2) selon l'une quelconque des revendications précédentes, caractérisé en ce quel'élément de transmission de force (74) peut être soutenu ou est soutenu, au moins dans les deux directions axiales (8, 10), de façon sécurisée contre la perte au niveau du support de lamelles (34) de l'agencement de couplage à lamelles (22).

10. Dispositifde couplage (2) selon l'une quelconque des revendications précédentes, **caractérisé en ce qu'**une force d'actionnementpeut être transmise pour l'actionnement de l'agencement de couplage à lamelles (22), de préférence sans démultiplication de levier, dans le rapport 1:1, par l'élément de transmission de force (74),l'élément de transmission de force (74) ne fournissant de façon particulièrement préféréeaucun apport propre de force.

11. Dispositifde couplage (2) selon l'une quelconque des revendications précédentes, caractérisé en ce quel'élément de transmission de force (74) forme avec l'agencement de couplage à lamelles (22) un module (104) pouvant être monté ou étant monté de façon à accrocher ceséléments ensemble, ledit élémentpouvant être relié ou étant relié au dispositif d'actionnement (56) de préférenceen créant une liaison de l'élément de transmission de force (74) à un élément d'actionnement (92), le cas échéantd'un piston d'actionnement, d'un dispositif d'actionnement (56) pour l'actionnement de l'agencement de couplage à lamelles (22),l'élément de transmission de force (74) pouvant être raccordé ou étant raccordé à l'élément d'actionnement (92) de façon particulièrement préféréeen interposantun palier, le cas échéant un palier à rouleaux (96), pour découpler l'entraînement en rotation conjoint, ledit palier étant disposé le cas échéant au niveau de l'élément d'actionnement (92) ou de l'élément de transmission de force (74).

12. Dispositifde couplage (2) selon la revendication 11, caractérisé en ce quele module (104) comporte un tube porteur (52) au niveau duquel le support de lamelles (34) peut être soutenu ou est soutenu, de préférence de façon pivotable, de façon particulièrement préférée en interposant un palier à rouleaux (50), dans la direction radiale (14, 16), le cas échéant également dans au moins une direction axiale (8),le tube porteur (52) pouvant être relié ou étant relié au dispositif d'actionnement (56) le cas échéantpouvant être vissé ou étant vissé.

13. Dispositifde couplage (2) selon l'unequelconque des revendications 11 ou 12, caractérisé en ce quele module (104) comporte un amortisseur d'oscillations en torsion (58) dont le côté de sortie peut être soutenu ou est soutenu au niveau du côté d'entrée de l'agencement de couplage à lamelles (22), de façon particulièrement préférée au niveau du support de lamelles (34), de préférencede façon sécurisée contre la perte, et/ouque le module (104) peut être reliéou est relié de telle sorte au dispositif d'actionnement (56) que l'élément de transmission de force (74) est directement ou indirectement précontraint, indépendamment de la position de l'élément d'actionnement (92), par l'élément de rappel (110, 114), contre l'élément d'actionnement (92), de préférencetoutefois pas contre le support de lamelles (34) ou l'élément de soutien (102).

14. Dispositifde couplage (2), notammentdispositif de couplage multiple, selon l'une quelconque des revendications précédentes, **caractérisé en ce qu'**un deuxième agencement de couplage à lamelles (24) associé à un deuxième arbre d'entrée de boîte de vitesses, fonctionnant de préférence en mouvement lubrifié, est prévu pour la transmission facultative de couple de rotationentre l'unité d'entraînement (4) et le deuxième arbre d'entrée de boîte de vitesses,le deuxièmeagencement de couplage à lamelles (24) pouvant être actionné, via un deuxième élément de transmission de force (76), de préférencede façon hydraulique, ledit élément étant soutenu ou pouvant être soutenu de façon sécurisée contre la perte dans une direction axiale (10) au niveau du premier élément de transmission de force (74) et le deuxièmeagencement de couplage à lamelles (24) et le deuxième élément de transmission de force (76) étant réalisés de façon particulièrement préférée sous la forme d'une partie d'un module (104) pouvant être monté ou étant monté de façon accrocher ces éléments ensemble.

15. Dispositifde couplage (2) selon la revendication 14, caractérisé en ce quele deuxième élément de transmission de force (76) comporte des doigts d'actionnement (84), le cas échéantdes doigts axiaux, s'étendantde préférenceau travers d'évidements (80) dans un deuxièmesupport de lamelles (36), le cas échéantdans une section d'appui et/ou radiale (42) du deuxièmesupport de lamelles (36), dudeuxièmeagencement de couplage à lamelles(24), de façon particulièrement préféréedes éléments de guidage (108), réalisés le cas échéant à la façon d'un cadreet/ousous la forme d'éléments en matière plastique,étant insérés dans les évidements (80) via lesquels les doigts d'actionnement (84) peuvent être soutenus ou sont soutenusdans la direction périphérique (18, 20) et/ou dans la direction radiale (14, 16) au niveau du deuxième support de lamelles (36).
